# EUROPÄISCHE PATENTSCHRIFT

(11) **EP 1 926 930 B1**
(45) Veröffentlichungstag und Bekanntmachung des Hinweises auf die Patenterteilung: **29.04.2009**
(21) Anmeldenummer: 05785255.0
(22) Anmeldetag: 20.09.2005
(51) Int. Cl.: F16L 37/40

(54) **KUPPLUNGSEINRICHTUNG ZUM VERBINDEN VON LEITUNGSEINRICHTUNGEN, VORZUGSWEISE QUICK CONNECTOR**
COUPLING DEVICE FOR CONNECTING LINE DEVICES, PREFERABLY QUICK CONNECTOR
DISPOSITIF D'ACCOUPLEMENT DESTINE A RACCORDER DES CONDUITES, DE PREFERENCE RACCORD RAPIDE

(43) Veröffentlichungstag der Anmeldung: 04.06.2008
(73) Patentinhaber: VERITAS AG, 63571 Gelnhausen (DE)
(72) Erfinder: RÖSCH, Thomas, 63589 Linsengericht (DE); BECK, Bernhard, 63599 Biebergemünd (DE); HEMPEL, Werner, 61130 Nidderau (DE)
(74) Vertreter: Grünecker, Kinkeldey, Stockmair & Schwanhäusser Anwaltssozietät
(86) Internationale Anmeldenummer: PCT/EP2005/010141
(87) Internationale Veröffentlichungsnummer: WO 2007/033693

(56) Entgegenhaltungen:
- US-A- 4 332 273
- US-A- 5 485 982
- US-A1- 2002 125 452

## Beschreibung

Die Erfindung bezieht sich auf eine Kupplungseinrichtung zum Verbinden von Leitungseinrichtungen, vorzugsweise Quick Connector, mit einem Kupplungsgehäuse, das eine Verbindungseinrichtung, die mit einem Endabschnitt einer Leitungseinrichtung oder einer zweiten Verbindungseinrichtung verbindbar ist, und einen Ventilkörper aufweist, welcher bei Zusammenführen des Endabschnitts der Leitungseinrichtung oder der zweiten Verbindungseinrichtung mit dem Kupplungsgehäuse von einer geschlossenen Stellung in eine geöffnete Stellung überführbar ist, gemäß dem Oberbegriff des Anspruchs 1.

Derartige Kupplungseinrichtungen sind unter anderem als selbstschließende Schnellkupplungen für Flüssigkeits- und Gasleitungen aus dem Stand der Technik in verschiedenen Ausführungsformen bekannt und werden z.B. im Automobilbau eingesetzt.

So zeigt die DE 10048502 C1 eine Steckverbindung mit selbsttätig schließender Auslaufsperre, bestehend aus einem zylindrischen Aufnahmegehäuse mit einer Öffnung zum Einführen eines rohrförmigen Einsteckteils, das mit einem umlaufenden Befestigungskragen versehen ist, welcher in einem im Einführungsbereich des Aufnahmegehäuses angeordneten Verriegelungselement verrastbar ist. Im Durchflussraum des Aufnahmegehäuses ist außerdem ein Ventilkörper angeordnet, durch welchen der Durchflussraum selbsttätig verschlossen und beim Einführen des Einsteckteils von dessen Stirnfläche gegen die Kraft einer Schraubenfeder in eine Öffnungsstellung gedrückt wird.

Die US 5,485,982A offenbart einen Quick Connector mit einem Gehäuse mit einer Aufnahmeöffnung zum Einführen eines Leitungsendstücks mit einem umlaufenden Befestigungskragen, das mittels Rückhaltefedern innerhalb der Aufnahmeöffnung des Gehäuses verrastbar ist und ein Verschlussventil innerhalb des Gehäuses betätigt, das den Durchfluss in beide Richtungen nach dem Einstecken des Leitungsendstücks freigibt. Weiterhin zeigt die US 5,485,982A einen Quick Connector, der als Winkelsteckverbinder ausgeführt ist, und ein gebogenes Anschlussrohr aufweist.

Derartige Steckverbinder sind jedoch hinsichtlich ihrer Funktionsabschnitte, dem Verbindungsabschnitt und dem Ventilabschnitt starr und linear aufgebaut und beanspruchen insbesondere in Einsteckrichtung einen erheblichen Bauraum, was vornehmlich bei abgewinkelten Steckverbindern von Bedeutung ist.

In der Automobilindustrie führt dies jedoch im Hinblick auf die konstruktiven Anforderungen unter anderem moderner Motoren- und Kraftfahrzeugentwicklungen unter Vorgabe immer kompakterer und raumsparenderer Konstruktionen mit der Folge zunehmender Verbauung der Einbauorte häufig zu Problemen, da es einerseits teilweise nicht möglich ist, Quick Connectoren mit Ventileinheit nach dem Stand der Technik zu fertigen, die den konstruktiven Vorgaben genügen und andererseits der Einsatz herkömmlicher, kompakt gestaltbarer Quick Connectoren ohne Ventileinheit, die mit einer aus dem Quick Connector ausgelagerten - und dann nicht automatisch bei Lösen der Leitungsverbindung betätigten - Ventileinheit kombiniert werden, aus Gründen der Arbeitseffizienz und der Sicherheit bei Einsatz und Montage nicht in Betracht kommt.

Eine Kupplungseinrichtung mit den Merkmalen des Oberbegriffs des Anspruchs 1 ist aus US 4,332,273 bekannt.

Der Erfindung liegt deshalb die Aufgabe zugrunde, eine Kupplungseinrichtung zum Verbinden von Leitungseinrichtungen, vorzugsweise Quick Connector, mit Ventileinrichtung gemäß dem Oberbegriff von Anspruch 1 anzugeben, die derartigen konstruktiven Anforderungen Rechnung trägt und eine - insbesondere in Einbaurichtung - besonders kompakte und hinsichtlich ihrer Geometrie und Ausgestaltung flexibel an konstruktive Erfordernisse und Einbaubedingungen anpassbare Kupplungseinrichtung ermöglicht.

Diese Aufgabe wird erfindungsgemäß gelöst durch eine Kupplungseinrichtung zum Verbinden von Leitungseinrichtungen, vorzugsweise Quick Connector, deren Ventilkörper mittels einer Kraftumlenkungseinrichtung durch Zusammenführen des Endabschnitts der Leitungseinrichtung oder der zweiten Verbindungseinrichtung mit dem Kupplungsgehäuse betätigbar ist.

Ein Vorteil der Erfindung liegt in der Möglichkeit der Änderung der Flussrichtung innerhalb des zwischen Kupplungsabschnitt und Ventilabschnitt angeordneten Abschnitts, der eine besonders kompakte Gestaltung der Verbindungseinrichtung ermöglicht. Weiterhin erlaubt die erfindungsgemäße Konstruktion eine besonders flexible Anpassung der Kupplungseinrichtung an enge und verwinkelte Einbausituationen. Unter solchen Bedingungen ist es zumeist von Vorteil, dass die erfindungsgemäße Kupplungseinrichtung in Verbindungsrichtung besonders kompakt ausgeführt werden kann. Ein weiterer Vorteil der erfindungsgemäßen Kupplungseinrichtung liegt in der Möglichkeit der räumlichen Trennung von Kupplungs- und Sperrstelle des Verbindungs- und Ventilabschnitts, was einen Zugewinn an Sicherheit darstellen, aber auch zur konstruktiven Optimierung beispielsweise des Durchströmungswiderstands genutzt werden kann, da die Ventileinheit nicht im Anschluss an den Verbindungsabschnitt untergebracht werden muss und somit verlagert und strömungsgünstig ausgestaltet oder an einen weniger gefährdeten Ort verlegt werden kann. Auch wäre es denkbar, durch die geometrische Gestaltung der Kupplungseinrichtung bzw. die Materialwahl, eine Kupplungseinrichtung mit ausgelagerter Ventileinheit zu fertigen, die im Falle eines Unfalls oder Motorraumbrandes einen deformationsbedingten bzw. temperaturbedingten Selbstschluss durchführt und die Kraftstoffzufuhr unterbricht. Ein weiterer Pluspunkt ist, dass die erfindungsgemäße Kupplungseinrichtung in einem Abschnitt zwischen dem Verbindungsbereich und dem Ventilbereich flexibel ausgestaltet werden kann, was unter anderem den Einbau erheblich erleichtern kann.

Besonders vorteilhaft sind derartige Kupplungseinrichtungen in der Automobilindustrie zu verwenden, um den Kraftstoffdurchfluss freizugeben bzw. zu unterbrechen, wenn Motoren, die am Produktionsort zum Probelauf an Kraftstoffleitungen angeschlossen werden, nach dem Probelauf wieder von der Kraftstoffzufuhr abgetrennt werden, um sie an die Montagestraße zum bestimmungsgemäßen Einbau zu transportieren und dort wiederum an eine Kraftstoffleitung anzuschließen oder, um den Motor im Zuge von Wartungs-, Austausch- oder Reparaturarbeiten aus dem Fahrzeug herausbauen bzw. wieder zurückbauen zu können, ohne dass es zur Leckage von Kraftstoff aus der Kraftstoffleitung kommen kann. Auch wenn Vorteile und Verwendung der Erfindung in besonderem Maße in der Automobiltechnik zum Tragen kommen und erläutert werden, bleibt die vorteilhafte Verwendung der Erfindung nicht auf diesen Bereich beschränkt, und kann ihre günstigen Eigenschaften ebenfalls in anderen Bereichen des Maschinenbaus, der Medizintechnik, der Bau- und Haustechnik und der Industrie entfalten.

In der erfindungsgemäßen Ausführungsform kann das Kupplungsgehäuse der Kupplungseinrichtung zwischen Verbindungsabschnitt und Ventilabschnitt einen flexiblen Abschnitt enthalten und die verbindungseinrichtungsseitige Achse und die ventilseitige Achse der Kupplungseinrichtung gegeneinander verschwenkbar und/oder verschiebbar sein. Durch eine derartige Konstruktion kann man eine Kupplungseinrichtung bereitstellen, deren Geometrie nicht starr vorgegeben ist und die sich den Einbausituationen anpassen kann, wodurch sich oft auch der Einbau einer solchen Kupplung erleichtert oder dieser unter bestimmten Bedingungen erst möglich wird.

In einer bevorzugten Ausführungsform der erfindungsgemäßen Kupplungseinrichtung kann das Kupplungsgehäuse eine Aufnahme aufweisen, in die der Endabschnitt der Leitungseinrichtung einsteckbar und in der dieser Endabschnitt in eingesteckter Stellung befestigbar ist und der Ventilkörper vorzugsweise selbsttätig schließend ist und mittels der Kraftumlenkungseinrichtung durch Einführen des Endabschnitts der Leitungseinrichtung in die Öffnungsstellung überführbar ist, wodurch sich eine besonders kompakte und für viele Einbauerfordernisse zweckmäßige Ausführungsform, bei der alle beweglichen Komponenten kompakt in der Kupplungseinrichtung zusammenführbar sind, erzielen lässt.

In einer weiteren bevorzugten Ausführungsform kann das Kupplungsgehäuse einen abgewinkelten oder gekrümmten Durchströmungskanal aufweisen. Hierdurch kann die Kupplungseinrichtung bereits beim Herstellungsprozess den konstruktiven Gegebenheiten angepasst und mit einem einfach herzustellenden und robusten Gehäuse ausgestattet werden.

In einer weiteren bevorzugten Ausführungsform können die verbindungseinrichtungsseitige Achse und die ventilseitige Achse der Kupplungseinrichtung zueinander im Winkel stehen und die beiden Achsen vorzugsweise einen 90° Winkel einschließen. Diese Geometrie bietet sich unter anderem für typische Winkelsteckverbindungen an, bei denen die Leitungseinrichtung z.B. eng an einem senkrecht zur Einsteckrichtung ausgerichteten Objekt entlang geführt werden oder möglichst wenig in den Einbauraum vorkragen soll.

In einer weiteren bevorzugten Ausführungsform kann die Kraftumlenkungseinrichtung eine Druckübertragungseinrichtung aufweisen, die eine mechanisch und konstruktiv besonders einfach zu realisierende und zuverlässige Umlenkung und Nutzung der Einsteckkraft zur Betätigung der Ventileinrichtung ermöglicht.

In einer weiteren bevorzugten Ausführungsform kann die Druckübertragungseinrichtung zumindest abschnittsweise flexibel ausgeführt sein, wodurch im Umlenkungsbereich eine hohe Flexibilität für starke Richtungsänderungen und/oder enge Krümmungsradien erzielt werden kann, während unter anderem in geraden Abschnitten beispielsweise im Ventil- und/oder Verbindungsbereich der Kupplungseinrichtung starre Abschnitte bei der Druckübertragungseinrichtung zum Einsatz kommen können.

In einer weiteren bevorzugten Ausführungsform kann die Druckübertragungseinrichtung im Lumen des Durchströmungskanals des Kupplungsgehäuses und im Durchströmungsweg zwischen dem Verbindungsabschnitt für den Endabschnitt der Leitungseinrichtung oder der zweiten Verbindungseinrichtung und dem Ventilkörper angeordnet sein. Eine derartige Anordnung ermöglicht in vielen Fällen einen konstruktiv einfachen Aufbau, da hierdurch die Druckübertragungseinrichtung als Ganzes zusammen mit allen Ventilkomponenten innerhalb des Durchströmungskanals untergebracht werden kann und dadurch konstruktiv aufwendige Durchführungen und Abdichtungen beweglicher Teile durch die/in der Wand des Durchströmungskanals entfallen können.

In einer weiteren bevorzugten Ausführungsform kann die Druckübertragungseinrichtung innen hohl und durchströmbar ausgeführt sein, was eine einfache und strömungsgünstige Konstruktion der Kupplungseinrichtung ermöglicht.

In einer weiteren bevorzugten Ausführungsform kann die Druckübertragungseinrichtung eine zumindest abschnittsweise flexible Schubumlenkungseinrichtung enthalten. Hierdurch kann die Druckübertragungseinrichtung konstruktiv besonders gut optimiert werden, da nur in den Bereichen, in denen der Kraftvektor tatsächlich umgelenkt werden soll, eine an die mechanischen Erfordernisse angepasste Schubumlenkungseinrichtung in eine ansonsten z.B. starre Druckübertragungseinrichtung eingesetzt werden kann.

In einer weiteren bevorzugten Ausführungsform kann die Schubumlenkungseinrichtung einen metallischen Werkstoff aufweisen, wodurch sich typischerweise gute Werte bezüglich Inkompressibilität und damit Druckübertragung bei gleichzeitig -je nach Konstruktionsart - guten Flexibilitätseigenschaften erzielen lassen.

In einer weiteren bevorzugten Ausführungsform kann die Schubumlenkungseinrichtung eine Mehrzahl von Drähten oder Filamenten enthalten, was eine einfache Möglichkeit zur Erzielung der notwendigen Flexibilität der Schubumlenkungseinrichtung darstellt.

In einer weiteren bevorzugten Ausführungsform kann die Schubumlenkungseinrichtung einen glasartigen oder keramischen Werkstoff aufweisen, wodurch die Schubumlenkungseinrichtung besonders inkompressibel und beständig gegenüber Temperatur und aggressiven Chemikalien ausgeführt werden kann.

In einer weiteren bevorzugten Ausführungsform kann die Schubumlenkungseinrichtung einen Gleit- und/oder Schutzüberzug aufweisen, wodurch sich beispielsweise die Gleiteigenschaften und/oder die Medienresistenz bedeutend verbessern lassen.

In einer weiteren bevorzugten Ausführungsform kann die Schubumlenkungseinrichtung in Axialrichtung eine Mehrzahl miteinander in Anlage bringbarer Schubteilelemente umfassen, was die Flexibilität bedeutend erhöht.

In einer weiteren bevorzugten Ausführungsform können die Schubteilelemente im Wesentlichen ringförmig oder torusförmig sein oder im Wesentlichen kugel- oder ellipsoidförmig sein und zumindest einen Durchflusskanal aufweisen. Hierdurch ist es besonders einfach möglich, eine in Axialrichtung mehrere in Anlage bringbare Schubteilelemente umfassende Schubumlenkungseinrichtung herzustellen, die sich an die Krümmung des Durchflusskanals anpasst und einen geringen Durchströmungswiderstand aufweist.

In einer weiteren bevorzugten Ausführungsform kann die Schubumlenkungseinrichtung einen polymeren Werkstoff aufweisen, bevorzugt einen Thermoplasten, ein thermoplastisches Elastomer oder ein Elastomer. Hierdurch wird es in vielen Anwendungsfällen möglich sein, durch die Materialeigenschaften eines geeigneten polymeren Werkstoffs Flexibilität und Kompressionssteifheit zu kombinieren sowie gute Medienbeständigkeit gegen die im Einsatzbereich verwendeten Stoffe und günstige Gleit- und Verschleißeigenschaften zu erzielen und eine besonders kostengünstige Schubumlenkungseinrichtung herzustellen.

In einer weiteren bevorzugten Ausführungsform kann die Druckübertragungseinrichtung einstückig mit der Schubumlenkungseinrichtung ausgebildet sein, wodurch sich Fertigungsaufwand und -kosten deutlich reduzieren lassen.

In einer weiteren bevorzugten Ausführungsform kann die Schubumlenkungseinrichtung Stabilisierungseinrichtungen aus einem metallischen oder polymeren Werkstoff, bevorzugt aus einem metallischen Werkstoff, aufweisen, die vorzugsweise zur Aufnahme axialer Zug- und/oder Druckkräfte bestimmt sind. Durch einen derartigen Aufbau kann z.B. die Konstruktion einer Schubumlenkungseinrichtung aus einem polymeren Werkstoff weiter verbessert werden, indem durch Kombination z.B. eines besonders flexiblen, die Außenstruktur der Schubumlenkungseinrichtung vorgebenden Werkstoffs mit einem besonders zug- und/oder druckfesten zweiten metallischen oder polymeren Werkstoffs die Einsatzeigenschaften verbessert werden .

In einer weiteren bevorzugten Ausführungsform kann die Stabilisierungseinrichtung Abstandselemente zur Druckaufnahme und/oder Biegungsbegrenzung enthalten. Durch eine derartige Konstruktion ist es z.B. möglich, eine besonders flexible oder weiche, z.B. aus einem polymeren Werkstoff bestehende Schubumlenkungseinrichtung zu verwenden, die z.B. durch in geringem Abstand voneinander angeordnete Ringelemente gegen radiale Deformation stabilisiert wird und die gleichzeitig unter Umständen ermöglichen, die Biegung der Schubumlenkungseinrichtung bei krümmungsinnenseitigem Aneinanderstoßen der Stabilisierungseinrichtungen zu begrenzen.

In einer weiteren bevorzugten Ausführungsform kann die Schubumlenkungseinrichtung ein schraubenfederartiges Element, bevorzugt aus einem metallischen oder polymeren Werkstoff, aufweisen, deren Windungen bestimmt sind, sich auf Druck gegeneinander abzustützen, wodurch eine konstruktiv sehr einfache Schubumlenkungseinrichtung realisierbar ist.

In einer weiteren bevorzugten Ausführungsform kann die Druckübertragungseinrichtung, zumindest abschnittsweise, einen flexiblen, schubsteifen Vollzylinder aufweisen, dessen Durchmesser bevorzugt kleiner als der Halbmesser des Durchströmungskanals ist, und von vorzugsweise drei bis acht, in Radialebenen und voneinander in Umfangrichtung gleich beabstandet angeordneten Stütz- und Stabilisierungsrippen umgeben ist. Durch eine solche Konstruktion lässt sich das hauptsächlich druckübertragende Element bei Beanspruchung nur eines geringen Anteils der Querschnittsfläche des Durchströmungskanals im Bereich der Mittelachse des Durchströmungskanals anordnen und durch die Stütz- und Stabilisierungsrippen stabilisieren und vor radialer Auslenkung durch Ausweichbewegungen bei Kraftübertragung schützen, wobei der Raum um den schubsteifen Vollzylinder zur Durchströmung genutzt werden kann.

In einer weiteren bevorzugten Ausführungsform kann die Schubumlenkungseinrichtung transversal geführte Einschnitte aufweisen, die bevorzugt von einer Mantellinie oder zwei, einander diametral gegenüberliegenden Mantellinien auf die Mittellinie zulaufen und bevorzugt als V-förmige Einkerbungen ausgeführt sind, wodurch sich die Flexibilität bedeutend erhöhen kann. Außerdem ist es möglich, im Falle auf der Krümmungsinnenseite angeordneter bevorzugt V-förmiger Einkerbungen den Krümmungsradius in Minimumrichtung auf den Wert zu begrenzen, der durch das Zusammenstoßen der ehemals in V-Form ausgeführten Einkerbungsflanken vorgegeben wird.

In einer weiteren bevorzugten Ausführungsform kann die Druckübertragungseinrichtung Stützeinrichtungen aufweisen, die gegen die Innenwand des Durchströmungskanals des Kupplungsgehäuses abstützbar sind. Hierdurch kann eine Stabilisierung der Druckübertragungseinrichtung in Bezug auf die Mittelachse des Durchströmungskanals gewährleistet und eine Auslenkung der Druckumlenkungseinrichtung im Falle der Übertragung von Zug- und Druckkräften reduziert werden.

In einer weiteren bevorzugten Ausführungsform können die Stützeinrichtungen die Druckübertragungseinrichtung umgebende Gleitelemente, vorzugsweise Gleitringe, umfassen, wodurch sich die Abstützung der Druckübertragungseinrichtung innerhalb des Durchströmungskanals besonders einfach vornehmen lässt.

In einer weiteren bevorzugten Ausführungsform können die Stützeinrichtungen Gleitabschnitte, Gleit-Abstandsabschnitte oder Gleit-Führungsabschnitte umfassen, die an die Druckübertragungseinrichtung angeformt sind und an der Innenwand des Durchströmungskanals des Kupplungsgehäuses oder besonderen, insbesondere nutartigen, Abschnitten derselben gleitend in Anlage bringbar sind und die der Reibungsreduzierung, Beabstandung, Wegbegrenzung und/oder Drehsicherung dienen. Hierbei ist es z.B. im Falle des Einsatzes eines Spritzgussteils, z.B. aus einem polymeren Werkstoff als Druckübertragungseinrichtung möglich, dieses Teil einstückig auszuführen und in einem Fertigungsgang mit Stützeinrichtungen zu versehen und diese Stützeinrichtungen dahingehend zu optimieren, dass sie entweder hauptsächlich den Gleitwiderstand der Druckübertragungseinrichtung an der Innenwand des Durchströmungskanals verringern und/oder einen zusätzlichen Abstand zwischen Druckübertragungseinrichtung und Innenwand des Durchströmungskanals gewährleisten. Gleichzeitig könnten derartige Abschnitte auch den axialen Arbeitsweg der Druckübertragungseinrichtung begrenzen und/oder als Drehsicherung eine Verdrehung der Druckübertragungseinrichtung innerhalb des Durchströmungskanals verhindern, wenn diese z.B. in Nutabschnitten innerhalb des Durchströmungskanals eingreifen.

In einer weiteren bevorzugten Ausführungsform kann der Hohlraumabschnitt des Durchströmungskanals des Kupplungsgehäuses, der die Druckübertragungseinrichtung umschließt, an seiner Innenwand Gleitelemente, Gleit-Abstandselemente oder Gleit-Führungselemente aufweisen, die an der Druckübertragungseinrichtung oder an mit dieser verbundenen Einrichtungen oder besonderen, insbesondere nutartigen, Abschnitten derselben gleitend in Anlage bringbar sind und der Reibungsreduzierung, Beabstandung, Wegbegrenzung und/oder Drehsicherung dienen. Hierbei ist es z.B. im Falle des Einsatzes eines Spritzgussteils, z.B. aus einem polymeren Werkstoff als Druckübertragungseinrichtung möglich, dieses Teil einstückig auszuführen und in einem Fertigungsgang mit Gleitelementen, Gleit-Abstandselementen oder Gleit-Führungselementen zu versehen und diese dahingehend zu optimieren, dass sie entweder hauptsächlich den Gleitwiderstand der Druckübertragungseinrichtung an der Innenwand des Durchströmungskanals verringern und/oder einen zusätzlichen Abstand zwischen Druckübertragungseinrichtung und Innenwand des Durchströmungskanals erzeugen. Gleichzeitig könnten derartige Elemente auch den axialen Arbeitsweg der Druckübertragungseinrichtung begrenzen und/oder als Drehsicherung eine Verdrehung der Druckübertragungseinrichtung innerhalb des Durchströmungskanals verhindern, wenn diese als Gleit-Führungselemente z.B. in Nutabschnitte der Druckübertragungseinrichtung eingreifen.

In einer weiteren bevorzugten Ausführungsform kann die Kupplungseinrichtung eine Anschlageinrichtung für den Endabschnitt der Leitungseinrichtung oder die zweite Verbindungseinrichtung aufweisen, die mit dem Endabschnitt der Leitungseinrichtung oder dem zweiten Verbindungsabschnitt bei Zusammenführen desselben/derselben mit dem Kupplungsgehäuse mit diesem/dieser in Anlage bringbar und verschiebbar ist und bei Verbindung des Endabschnitts der Leitungseinrichtung oder der zweiten Verbindungseinrichtung mit dem Kupplungsgehäuse zwischen dem Endabschnitt der Leitungseinrichtung oder der zweiten Verbindungseinrichtung und der Druckübertragungseinrichtung angeordnet sein. Durch eine derartige Anschlageinrichtung kann in vorteilhafterweise der Kontaktbereich zum Endabschnitt der Leitungseinrichtung oder der zweiten Verbindungseinrichtung konstruktiv verbessert werden und so die Kraft bei Zusammenführen des.Endabschnitts der Leitungseinrichtung oder der zweiten Verbindungseinrichtung mit dem Kupplungsgehäuse besonders sicher und zuverlässig auf die Druckübertragungseinrichtung übertragen werden, wobei gleichzeitig die Druckübertragungseinrichtung vor Beschädigung und Verschleiß geschützt wird.

In einer weiteren bevorzugten Ausführungsform kann die Anschlageinrichtung eine axiale Zentralöffnung aufweisen, die vorzugsweise mit der Öffnung einer hohlen Druckübertragungseinrichtung in Flucht angeordnet ist, wodurch sich auf einfache Weise eine besonders strömungsgünstige Ausführung erzielen lässt.

In einer weiteren bevorzugten Ausführungsform kann die Anschlageinrichtung ein bis acht, vorzugsweise drei oder vier, radial angeordnete Rippen oder Stege aufweisen, die gleichabständig über den Umfang verteilt sind und die an der Innenwand des Kupplungsgehäuses abstützbar und/oder in Führungseinrichtungen der Innenwand des Kupplungsgehäuses führbar sind. Bei einer derartigen Ausführungsform ist es möglich, die Anschlageinrichtung umströmbar zu gestalten und gleichzeitig einen großen Durchströmungsquerschnitt konstruktiv bereitzustellen. Zudem ist es möglich, die Rippen oder Stege hinsichtlich ihrer Formgebung so zu gestalten, dass sie eine Rückhalte und/oder Führungsfunktion übernehmen können. Weiterhin kann eine derartige Anschlageinrichtung an eine im Querschnitt ähnlich gestaltete Druckübertragungseinrichtung mit entsprechenden Stütz- und Stabilisierungsrippen angepasst werden.

In einer weiteren bevorzugten Ausführungsform kann die Schubumlenkungseinrichtung federelastische Eigenschaften aufweisen und dafür vorgesehen sein, den Ventilkörper in Schließrichtung desselben mit einer Rückstellkraft zu beaufschlagen und den Ventilkörper bei Entfernen des Endabschnitts der Leitungseinrichtung oder der zweiten Verbindungseinrichtung aus dem Verbindungsbereich des Kupplungsgehäuses von der geöffneten Stellung in die geschlossene Stellung zu überführen. Dies könnte beispielsweise durch eine Schubumlenkungseinrichtung erzielt werden, die aus einem metallischen oder polymeren Werkstoff hoher Elastizität besteht, wodurch sie als Federelement wirkt und beispielsweise durch geeignete Kontaktbereiche innerhalb des Durchströmungskanals, gegen die sich die Schubumlenkungseinrichtung abstützt, über das Rückkehrbestreben des Federelement in seine Ausgangsform zu einer Rückstellbewegung des Ventilkörpers führen. So wäre es beispielsweise u.a. denkbar, die Schubumlenkungseinrichtung als Blattfeder oder Schraubenfeder auszuführen oder eine solche Feder in die Schubumlenkungseinrichtung zu integrieren. Hierdurch kann konstruktiv sichergestellt werden, dass - unabhängig von den Druck- und Durchflussverhältnissen in den mit der Kupplungseinrichtung verbundenen Leitungseinrichtungen ein sofortiges aktives Schließen der Ventileinrichtung bei Entfernen des Endabschnitts der Leitungseinrichtung oder der zweiten Verbindungseinrichtung eintritt und eine Leckage unterbleibt. Durch die hier vorgeschlagene federelastische Ausführung der Schubumlenkungsvorrichtung kann vorgenannte Funktion ohne den Einsatz weiterer Bauteile gewährleistet werden.

In einer weiteren bevorzugten Ausführungsform kann die Kupplungseinrichtung eine Rückstelleinrichtung aufweisen, welche den Ventilkörper in Schließrichtung desselben mit einer Rückstellkraft beaufschlagt und dafür vorgesehen ist, den Ventilkörper bei Entfernen des Endabschnitts der Leitungseinrichtung oder der zweiten Verbindungseinrichtung aus dem Verbindungsbereich des Kupplungsgehäuses von der geöffneten Stellung in die geschlossene Stellung zu überführen. Dabei ist hier eine eigenständige Einrichtung oder ein Bauteilabschnitt, der nicht oder nicht überwiegend - gleichzeitig für die Druckübertragung vorgesehen ist, für die Rückstellfunktion zuständig und optimiert. Hierdurch kann konstruktiv besonders zuverlässig sichergestellt werden, dass - unabhängig von den Druck- und Durchflussverhältnissen in den mit der Kupplungseinrichtung verbundenen Leitungseinrichtungen - ein sofortiges selbsttätiges Schließen der Ventileinrichtung bei Entfernen des Endabschnitts der Leitungseinrichtung oder der zweiten Verbindungseinrichtung eintritt und eine Leckage unterbleibt.

In einer weiteren bevorzugten Ausführungsform kann die Rückstelleinrichtung eine Schraubenfeder aufweisen, wodurch sich ein großer Rückstellweg und ein besonders raumeffizienter Einbau bei gleichzeitig guter Platzierbarkeit ergibt.

In einer weiteren bevorzugten Ausführungsform kann die Schraubenfeder, innerhalb des Durchströmungskanals des Kupplungsgehäuses und zumindest überwiegend in einem Abschnitt angeordnet sein, der im Durchströmungskanal zwischen dem Verbindungsbereich des Kupplungsgehäuses für den Endabschnitt der Leitungseinrichtung oder die zweite Verbindungseinrichtung und dem Ventilkörper, bevorzugt in Schließrichtung des Ventilkörpers vor dem Ventilkörper und diesem benachbart, angeordnet sein. Hierdurch ist es möglich, die Schraubenfeder zwischen dem Verbindungsbereich und dem Ventilbereich der Kupplungseinrichtung anzuordnen und dadurch Baulänge einzusparen.

In einer weiteren bevorzugten Ausführungsform kann die Schraubenfeder innerhalb des Durchströmungskanals des Kupplungsgehäuses, zumindest Abschnitte der Druckübertragungseinrichtung umschließend, zwischen der Innenwand des Kupplungsgehäuses und der Druckübertragungseinrichtung angeordnet sein. Durch eine solche Konstruktion lässt sich eine besonders kompakte Bauweise erzielen und gleichzeitig die Druckfeder als Führungselement für die Druckübertragungseinrichtung mit nutzen.

In einer weiteren bevorzugten Ausführungsform kann die Schraubenfeder eine Zugfeder sein, wodurch sich eine universelle Konstruktionsmöglichkeit für die Rückstellung des Ventilkörpers, unabhängig von der Konstruktion der Druckübertragungseinrichtung ergibt.

In einer weiteren bevorzugten Ausführungsform kann die Schraubenfeder eine Druckfeder sein und zwischen einem mit der Druckübertragungseinrichtung mechanisch verbundenen Anschlagelement und einer davon axial beabstandeten und im Bezug auf dieses Anschlagelement in Durchströmungsrichtung näher am Ventilkörper gelegenen gehäuseseitigen Auflage einspannbar sein, wobei der Ventilkörper über die Druckübertragungseinrichtung durch Zug in Schließrichtung überführbar und die Druckfeder bei Zusammenführen des Endabschnitts der Leitungseinrichtung mit der zweiten Verbindungseinrichtung mit dem Kupplungsgehäuse auf Druck belastbar sein. Hierdurch ergibt sich eine besonders zweckmäßige und konstruktiv elegante Lösung zur Nutzung der Druckübertragungseinrichtung zur Betätigung des Ventilkörpers in beide Richtungen, d.h. in Öffnungsrichtung und Schließrichtung, wobei die Druckübertragungseinrichtung als Druck-Zug-Element eingesetzt wird.

In einer weiteren bevorzugten Ausführungsform kann die gehäuseseitige Auflage der Druckfeder dem Ventilsitz benachbart angeordnet sein. Hierdurch lässt sich die Druckfeder zwischen dem Verbindungsabschnitt und dem Ventilabschnitt in unmittelbarer Nachbarschaft des Ventilsitzes anordnen und so vom Verbindungsabschnitt wegverlagern, wodurch die Kupplungseinrichtung in Einsteckrichtung besonders kompakt gehalten und gleichzeitig die Druckübertragungseinrichtung stabilisiert werden kann.

In einer weiteren bevorzugten Ausführungsform kann der Ventilkörper einteilig und starr aufgebaut sein, wodurch sich dieser besonders einfach fertigen lässt und sehr robust ist.

In einer weiteren bevorzugten Ausführungsform kann der Ventilkörper aus einem polymeren, metallischen, glasartigen oder keramischen Werkstoff bestehen, wodurch sich der Ventilkörper in weiten Grenzen an die Betriebsbedingungen anpassen lässt, entsprechend den konstruktiven Vorgaben herstellen lässt.

In einer weiteren bevorzugten Ausführungsform kann der Ventilkörper einen im Wesentlichen scheibenförmigen, konusförmigen, paraboloiden, birnenförmigen oder pilzförmigen Abschnitt enthalten, welcher mit dem Ventilsitz in Anlage bringbar ist. Durch eine solche Formgebung ist auf einfache Weise eine gute Dichtwirkung des Ventilkörpers gegenüber dem Ventilsitz erzielbar.

In einer weiteren bevorzugten Ausführungsform kann der Ventilkörper mindestens eine Ringdichtung aufweisen, was die Dichtigkeit des Ventilkörpers gegenüber dem Ventilsitz verbessert und mehr konstruktive Freiheiten zur Ausgestaltung des Ventilsitzes gewährleistet.

In einer weiteren bevorzugten Ausführungsform kann der Ventilkörper bewegbare Sektoreinrichtungen umfassen, welche Dichtkanten oder Dichtflächen aufweisen, über die in einem geschlossenen Zustand ein dichtender Kontakt der Sektoreinrichtung zu angrenzenden Dichtkanten oder Dichtflächen herstellbar ist, wobei diese Sektoreinrichtungen beim Überführen des Ventilkörpers in die geöffnete Stellung zumindest abschnittsweise in Radialrichtung von der Mittelachse entfernbar sind und einen Durchströmungsquerschnitt freigeben. Durch eine derartige Ausgestaltung des Ventilkörpers ist es möglich, den Ventilkörper auch durchströmbar zu gestalten und so gleichzeitig eine Umströmung und Durchströmung des Ventilkörpers zu erzielen, wodurch der Strömungswiderstand der Ventileinrichtung erheblich gesenkt und die Beeinträchtigung des Durchströmungskanals und auch die Wirbelbildung deutlich reduziert werden kann. Ein weiterer Vorzug der erfindungsgemäßen Kupplungsvorrichtung liegt in dem geraden Durchgang durch die Ventilvorrichtung, der nicht durch einen Ventilkörper behindert wird und somit bessere Reinigungs- und Sondierungsmöglichkeiten bietet.

In einer weiteren bevorzugten Ausführungsform kann im geschlossenen Zustand ein dichtender Kontakt zwischen den Dichtkanten oder Dichtflächen einander benachbarter Sektoreinrichtungen herstellbar sein und die in geschlossenem Zustand aneinander anliegenden Dichtkanten oder Dichtflächen einander benachbarter Sektoreinrichtungen können sich beim Überführen des Ventilkörpers in die geöffnete Stellung zumindest abschnittsweise in Umfangsrichtung voneinander entfernen. Bei einer solchen technisch einfach zu realisierender Struktur des Ventilkörpers kann sich der öffnungsseitige Abschnitt des Ventilkörpers maximal öffnen.

In einer weiteren bevorzugten Ausführungsform kann der Ventilkörper mit mehreren Sektoreinrichtungen im geschlossenen Zustand dichtend mit einer Außenkontur des Ventilkörpers mit dem Ventilsitz in Anlage bringbar sein, wodurch sich gleichzeitig mit dem Schließen der Dichtkanten oder Dichtflächen der Sektoreinrichtungen ein dichter Sitz des geschlossenen Ventilkörpers im Ventilsitz erzielen lässt.

In einer weiteren bevorzugten Ausführungsform kann der Ventilkörper hohl sein, wobei der Ventilkörper im geschlossenen Zustand eine in Richtung eines Öffnungsendes geschlossene Hohlform ausgebildet, die eine Öffnung in Richtung eines Nicht-Öffnungsendes des Ventilkörpers aufweist, und dessen Sektoreinrichtungen Dichtkanten ausbilden, durch die im geschlossenen Zustand ein dichtender Kontakt zwischen den Sektoreinrichtungen herstellbar ist. Durch eine solche hohle Ausführung des Ventilkörpers ist es möglich, den Durchströmungsquerschnitt größer zu halten und damit den Durchströmungswiderstand zu senken.

In einer weiteren bevorzugten Ausführungsform können die Sektoreinrichtungen relativ zu einem Ventilsitz in Axialrichtung bewegbar sein, wobei die Sektoreinrichtungen durch Gegenschieben gegen den Ventilsitz radial aufeinander zu bewegbar und schließbar sind und durch Entfernen vom Ventilsitz öffenbar sind. Durch eine solche Ausführungsform ist es in einfacher und technisch eleganter Weise möglich, die Sektorelemente durch Gegenschieben derselben gegen den Ventilsitz zu schließen und den Ventilkörper mit dem Ventilsitz dichtend in Anlage zu bringen. Besonders vorteilhaft ist diese Ausführungsform auch für eine Kopplung der Ventileinheit mit der Druckübertragungseinrichtung geeignet.

In einer weiteren bevorzugten Ausführungsform können die Sektoreinrichtungen des Ventilkörpers durch Ziehen des Ventilkörpers in den Ventilsitz schließbar sein, wodurch sich die Doppelschlussbewegung, welche die Dichtkanten der Sektoreinrichtungen in dichtenden Kontakt, und den Ventilkörper mit dem Ventilsitz dichtend in Anlage bringt, besonders einfach und effizient mit der Bewegung der Kraftumlenkungseinrichtung koppeln lässt.

In einer weiteren bevorzugten Ausführungsform kann der Ventilkörper mit der Druckübertragungseinrichtung verbindbar sein, durch die der Ventilkörper relativ zum Ventilsitz bewegbar ist. Bei dieser Ausführungsform ist es möglich, den Ventilkörper und die Druckübertragungseinrichtung, die zusammen einstückig oder mehrteilig ausgeführt sein können, direkt zu koppeln und so eine einfache und zuverlässige Konstruktion bereitzustellen.

In einer weiteren bevorzugten Ausführungsform kann der rotationssymmetrische oder polyedrische, achsensymmetrische Ventilkörper eine transversale Äquatorialebene aufweisen, in der dessen Transversalschnitt ein Flächenmaximum ausbildet, von der aus sich der Ventilkörper in Schließrichtung im Wesentlichen konisch verjüngt. Durch eine solche Formgebung des Ventilkörpers kann der Ventilkörper selbst gleichzeitig und ohne weitere Einrichtungen einen Dichtkonus ausbilden und die zur Schließbewegung der Sektoreinrichtungen notwendige radiale Schließkraft beim Ziehen des Ventilkörpers in den Ventilsitz erzeugen.

In einer weiteren bevorzugten Ausführungsform kann der Ventilkörper mindestens ein Grundelement umfassen, an der die Sektoreinrichtungen angelenkt sind. Hierdurch ist eine einfache und zuverlässige Konstruktion der Anlenkung der Sektoreinrichtungen möglich, die individuell mit dem Grundelement verbindbar sind und so zuverlässig gehalten und geführt werden.

In einer weiteren bevorzugten Ausführungsform können die Sektoreinrichtungen mittels Scharnieren, vorzugsweise Folienscharnieren, oder Biegeabschnitten mit dem Grundelement des Ventilkörpers verbunden sein und der Ventilkörper vorzugsweise einstückig ausgebildet werden. Eine solche Bauform ist konstruktiv und herstellungstechnisch besonders günstig und ermöglicht im Falle von Folienscharnieren oder Biegeabschnitten unter Umständen die Herstellung des gesamten Ventilkörpers, z.B. im Spritzgussverfahren, in nur einem Fertigungsschritt.

In einer weiteren bevorzugten Ausführungsform kann der Ventilkörper abschnittsweise unterschiedliche Werkstoffe aufweisen und vorzugsweise in einem Mehrkomponenten-Formverfahren herstellbar sein. Dies kann insbesondere durch Mehrkomponenten-Spritzgiess-Verfahren, Mehrkomponenten-Spritzpräge-Verfahren, oder entsprechende Sinterverfahren, Coextrusions-, Beschichtungs- oder Laminierverfahren geschehen. Hierdurch kann der Ventilkörper an u.a. die unterschiedlichen mechanischen Anforderungen der verschiedenen Funktionsabschnitte optimal angepasst werden, wodurch ein solcher Ventilkörper insbesondere für erhöhte Anforderungen besonders tauglich ist. So ist es beispielsweise auch denkbar, den Ventilkörper mit gleitfähigen oder abriebfesten Beschichtungen oder biegebeständigen Laminierungen zu versehen oder bewegliche oder dichtende Abschnitte mit zur Erfüllung der spezifischen Anforderungen besonders geeigneten Materialien auszustatten.

In einer weiteren bevorzugten Ausführungsform kann der Ventilkörper im Anlenkungsund Biegebereich der Sektoreinrichtungen im Vergleich zu den daran angrenzenden Bereichen des Ventilkörpers einen Werkstoff höherer Elastizität und/oder geringeren E-Moduls aufweisen, wodurch dieser Bereich besonders an die Biegebeanspruchung bei Ventilbetätigung angepasst werden kann.

In einer weiteren bevorzugten Ausführungsform kann der Ventilkörper im Bereich der Dichtkanten der Sektoreinrichtungen einen Dichtungswerkstoff aufweist. Auf diese Weise können beispielsweise besonders zuverlässig dichtende, anpassungsfähige, flexible, mediophobe gegenüber den den Ventilbereich durchströmenden Medien und/oder verschleißbeständige Dichtbereiche zwischen den Sektoreinrichtungen geschaffen werden.

In einer weiteren bevorzugten Ausführungsform kann der Ventilkörper im Ventilsitzbereich der Sektoreinrichtungen einen Dichtungswerkstoff aufweist. Auf diese Weise kann beispielsweise ein besonders zuverlässig dichtende, anpassungsfähiger, flexibler, mediophober gegenüber den den Ventilbereich durchströmenden Medien und/oder verschleißbeständiger Dichtbereich zwischen dem Ventilkörper und dem Ventilsitz geschaffen werden.

In einer weiteren bevorzugten Ausführungsform können die Sektoreinrichtungen in geöffneter Stellung vorgespannt sein, wodurch sich ein zuverlässiges und maximales Öffnen der Sektoreinrichtungen und damit die Freigabe des vollen Durchströmungsquerschnittes, unabhängig von Druck- und Durchströmungsverhältnissen beiderseits der Ventileinrichtung sicherstellen läßt.

In einer weiteren bevorzugten Ausführungsform können die Biegeabschnitte vorzugsweise eine dreidimensionale Form aufweisen, wobei die Werkstoffelastizität zur Vorspannung der Sektoreinrichtungen ausnutzbar ist. Durch eine solche Ausführung ist eine Bereitstellung der Vorspannung ohne zusätzlichen fertigungstechnischen Aufwand allein aufgrund von Materialeigenschaften und Formgebung möglich.

In einer weiteren bevorzugten Ausführungsform kann der Ventilkörper in Radialrichtung von einer Schutzhülse umgeben sein, wobei diese vorzugsweise den Ventilkörper zumindest in dessen geschlossenem Zustand in Radialrichtung im Wesentlichen vollständig umgibt. Durch eine solche Schutzhülse, die einstückig mit dem Gehäuse ausgebildet, in der ventilseitig sich anschließenden Leitungseinrichtung integriert oder separat und z.B. für Wartungsarbeiten vom Gehäuse trennbar mit demselben verbunden sein kann, ist es möglich, den Ventilkörper vor Beschädigungen bei Montage oder im Einsatz zuverlässig zu schützen.

In einer weiteren bevorzugten Ausführungsform kann die Schutzhülse mit dem Kupplungsgehäuse unverlierbar verbindbar und vorzugsweise mit diesem einstückig ausgebildet sein. Hierbei kann ein Verlieren und ggf. auch unbeabsichtigtes Lösen der Schutzhülse bei Montage und Einsatz zuverlässig vermieden werden. Dies kann durch geeignete mechanische Vorkehrungen erfolgen, oder-, falls eine Abnahme der Schutzhülse z.B. bei Montage- und Wartungsarbeiten nicht erforderlich ist, kostengünstiger und einfacher - durch eine stoffschlüssige Verbindung zwischen Schutzhülse und Kupplungsgehäuse, was am kostengünstigsten durch eine einstückige Ausführung beider vorgenannter Einrichtungen zu erzielen ist.

Die vorstehend ausgeführten Ausgestaltungen der Erfindung stellen lediglich eine Auswahl zweckmäßiger Gestaltungsmöglichkeiten des Erfindungsgegenstandes dar, die in den einzelnen Unteransprüchen niedergelegt sind. Diese speziellen Gestaltungsmöglichkeiten können einzeln oder, soweit technisch möglich und sinnvoll, auch in Kombination mehrerer der vorerwähnten Gestaltungsvarianten mit einer Kupplungseinrichtung gemäß dem Anspruch 1 Anwendung finden, wie aus den entsprechenden Rückbezügen der abhängigen Ansprüche ersichtlich.

Nachfolgend wird die Erfindung beispielhaft anhand einer Auswahl bevorzugter Ausführungsbeispiele in Verbindung mit den dazugehörigen Figuren näher erläutert. Es zeigen:
- Fig. 1: die schematische Darstellung eines Medianschnitts in Axialebene durch einen Quick Connector nach einer ersten Ausführungsform mit abgekoppeltem Lei- tungsstutzen und geschlossenem Ventil;
- Fig. 2: die schematische Darstellung eines Medianschnitts in Axialebene durch einen Quick Connector nach einer ersten Ausführungsform mit eingestecktem Lei- tungsstutzen und geöffnetem Ventil;
- Fig. 3: die schematische Darstellung eines Medianschnitts in Axialebene durch einen Quick Connector nach einer zweiten Ausführungsform mit abgekuppeltem Lei- tungsstutzen und geschlossenem Ventil;
- Fig. 4: die schematische Darstellung eines Medianschnitts in Axialebene durch einen Quick Connector nach einer zweiten Ausführungsform mit eingestecktem Lei- tungsstutzen und geöffnetem Ventil;
- Fig. 5: die schematische Detaildarstellung eines Medianschnitts in Axialebene durch den Ventilbereich eines Quick Connectors nach einer zweiten Ausführungs- form mit eingestecktem Leitungsstutzen und geöffnetem Ventil.

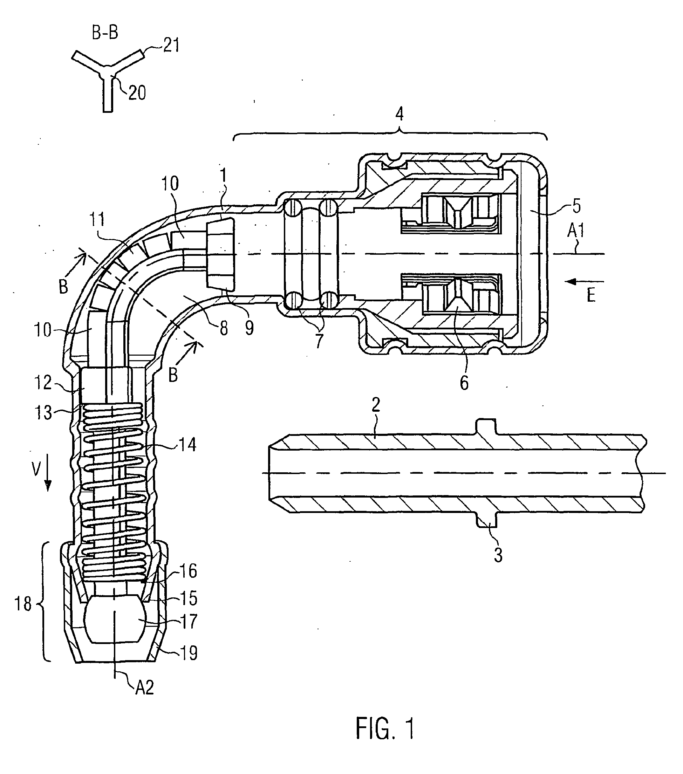

Fig. 1 zeigt einen Quick Connector oder eine Schnellkupplung nach einer ersten Ausführungsform mit einem Kupplungsgehäuse 1 zum Verbinden eines Leitungsendabschnitts oder eines Leitungsendstutzens 2 mit einem in Umfangsrichtung umlaufenden Befestigungskragen 3, bei dem das Leitungsendstück 2 abgekoppelt ist und sich das Ventil in geschlossener Stellung befindet.

Das Kupplungsgehäuse 1 weist einen geraden Achsabschnitt, die Einsteckachse A1, auf, der am verbindungsendseitigen Ende den Verbindungsabschnitt 4 umfasst, daran in Einsteckrichtung E anschließend, einen gekrümmten Abschnitt, der eine 90° Biegung beschreibt und ventilseitig wiederum in einen geraden Achsabschnitt, die Ventilachse A2, übergeht und im Ventilabschnitt 18 endet. Das Kupplungsgehäuse 1 ist hohl und von einem Durchströmungskanal 8 durchzogen, der im Ventilbereich (Ventilabschnitt 18) durch den Ventilkörper 17 in Schließstellung geschlossen wird.

Der Verbindungsabschnitt 4 des Kupplungsgehäuses 1 umfasst eine Aufnahmeöffnung 5 zur axialen Einführung (in Richtung E) des Leitungsstutzens 2 einer Leitung sowie mit einer Verbindungseinrichtung 6, durch die der Leitungsstutzen 2 arretiert werden kann, sowie in Einsteckrichtung E dahinter angeordnete Dichtungsringe 7, mittels derer der mechanisch arretierte Leitungsstutzen 2 hydraulisch oder pneumatisch mit dem Durchströmungskanal 8 verbunden und flüssigkeits- und/oder gasdicht gegenüber der Umgebung abgeschlossen werden kann.

Am ventilendseitigen und der Aufnahmeöffnung 5 entgegengesetzten Ende des Verbindungsabschnitts 4 ist ein in Axialrichtung durchströmbarer Anschlagring 9 angeordnet, der mit einer Druckübertragungseinrichtung 10 nach Art eines Druckstößels verbunden ist. Die Druckübertragungseinrichtung 10 nach Art eines Stößels ist hierbei aus einem flexiblen, medienbeständigen Kunststoff ausgeführt und besitzt in einem an den Anschlagring 9 angrenzenden Abschnitt zur Schubumlenkung einen flexiblen Stößelabschnitt 11. Dieser flexible Stößelabschnitt 11 weist zur Erhöhung der Flexibilität krümmungsaußenseitig transversal geführte Einschnitte auf, die von der krümmungsaußenseitigen Mantellinie in Richtung der Stößelmittelachse verlaufen. Der Stößel 10 selbst zeigt in dieser Ausführungsform ein in transversaler Schnittebene B- B dreiflügeliges Profil bestehend aus einem zentralen Schubzylinder 20 geringen Durchmessers, der von drei in Radialebenen und voneinander in Umfangsrichtung gleich beabstandet angeordneten Stütz- und Stabilisierungsrippen 21, die in transversaler Schnittebene um jeweils 120° rotiert angeordnet sind, umgeben ist.

In ventilendseitiger Richtung V schließt sich an den flexiblen Stößelabschnitt 11 ein starrer Abschnitt des Stößels 10 an, der ein Stützeinrichtung 12 trägt, das sich einerseits an der Gehäuseinnenwand des Durchströmungskanals 8 abstützt und so den Stößel 10 stabilisiert und andererseits gleichzeitig als Anschlagelement 13 für eine Druckfeder 14 dient.

Die Druckfeder 14 ist dabei zwischen vorerwähntem Anschlagelement 13 und einer dem Ventilsitz 15 benachbart angeordneten gehäuseseitigen Auflage 16 eingespannt und dient als Rückstelleinrichtung, das den Ventilkörper 17 bei abgekoppeltem Leitungsstutzen 2 in den Ventilsitz 15 zurückzieht und damit das Ventil schließt.

Weiterhin zeigt die Abbildung eine Schutzhülse 19, die den Ventilabschnitt 18 umschließt und so die Ventileinrichtung gegen Beschädigung bei Montage und im Betrieb schützt.

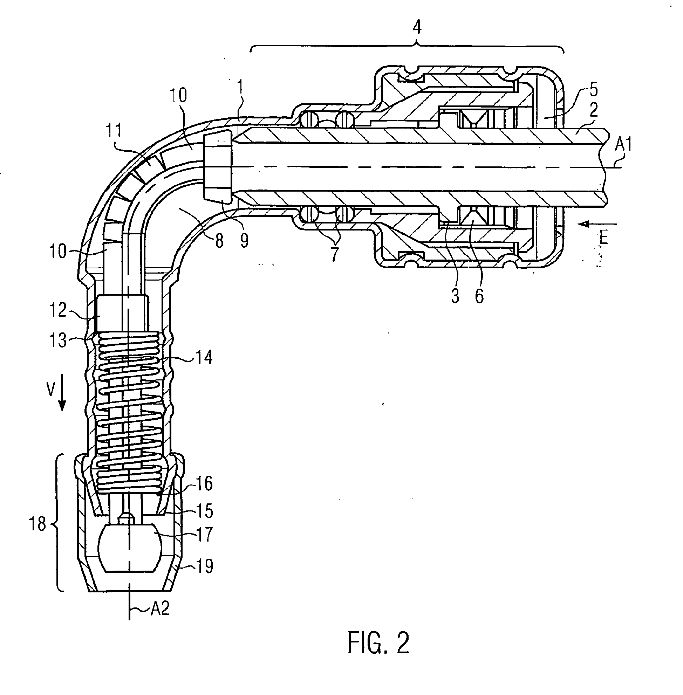

Fig. 2 zeigt dasselbe Ausführungsbeispiel wie Fig. 1, jedoch mit eingestecktem Leitungsstutzen 2 und geöffnetem Ventil. Damit entspricht das Ausführungsbeispiel in Fig. 2 hinsichtlich seiner Bauteile Fig. 1, so dass, um Wiederholungen zu vermeiden, nur auf Unterschiede eingegangen wird.

Fig. 2 zeigt den Leitungsstutzen 2 in arretierter Position innerhalb des Verbindungsabschnitts 4 des Kupplungsgehäuses 1, wobei Verbindungseinrichtungen 6 den Befestigungskragen 3 des Leitungsstutzens 2 hintergreifen und so arretieren. Durch Einschieben des Leitungsstutzens 2 wurde die Anschlageinrichtung 9 in Einsteckrichtung des Leitungsstutzens 2 im Vergleich zu dem in Fig. 1 dargestellten Zustand in Richtung E vorgeschoben und der Druck an den Stößel 10 weitergegeben und dieser in Ventilrichtung V weitergeschoben. Durch diese Bewegung kommt es durch die Bewegung des Anschlagelements 13 in Richtung gehäuseseitiger Auflage 16 zur Kompression der Druckfeder 14, die zwischen dem Anschlagelement 13 und der gehäuseseitigen Auflage 16 eingespannt ist. Gleichzeitig wird der mit der Druckübertragungseinrichtung 10 verbundene Ventilkörper 17 aus dem Ventilsitz 15 abgehoben, wodurch der Durchströmungskanal 8 am Ventil geöffnet wird und ein Medium hindurchströmen kann.

Bei Lösen der Verbindungseinrichtung 6 und Abziehen des Leitungsstutzens 2 kommt es durch die Rückstellkraft der Druckfeder 14 zu einer Umkehrung der Vorgänge mit einer gegenläufigen Bewegung der Druckübertragungseinrichtung 10, die den Ventilkörper 17 in den Ventilsitz 15 zurückzieht; wobei sich die Druckübertragungseinrichtung 10 und die Anschlageinrichtung 9 wieder in die in Fig. 1 dargestellten Positionen zurückbewegen.

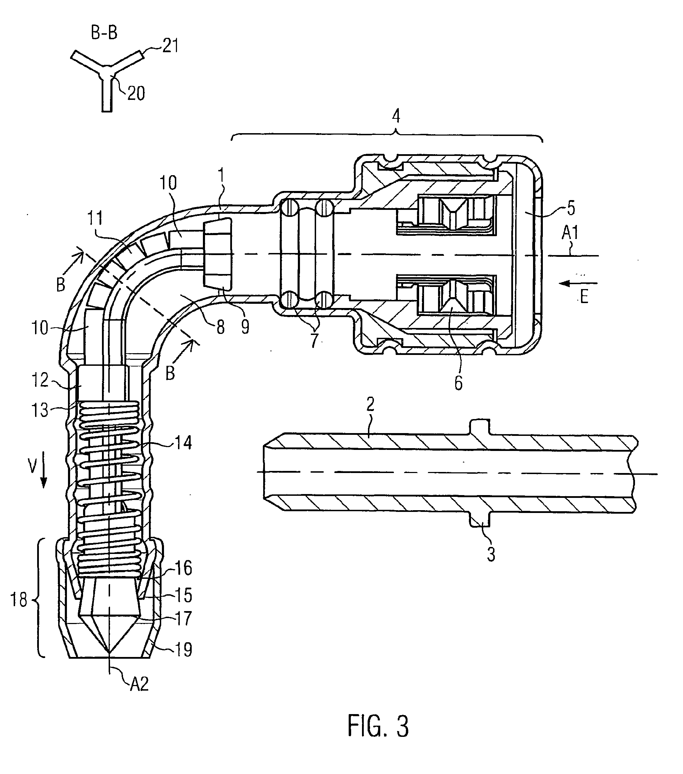

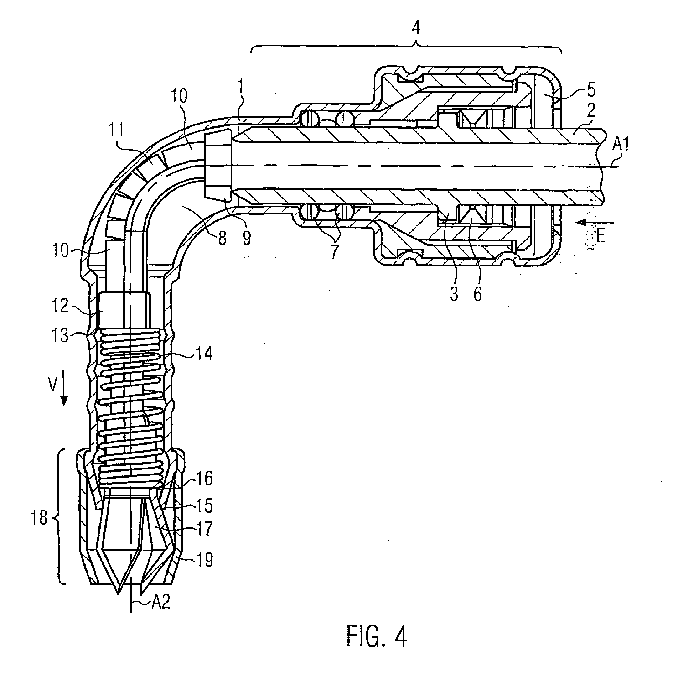

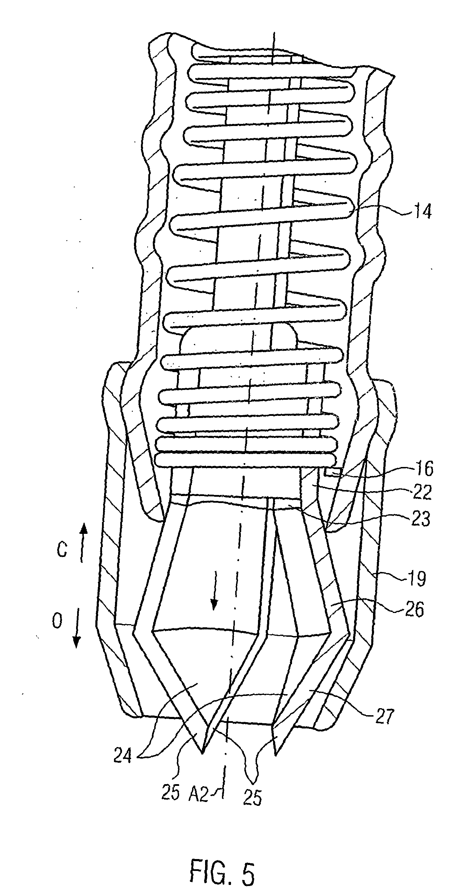

Fig. 3 und Fig. 4 zeigen den Fig. 1 und 2 entsprechende schematische Darstellungen eines medianen Schnitts in Axialebene durch einen Quick Connector mit abgekuppeltem Leitungsstutzen und geschlossenem Ventil (Fig. 3) bzw. schematische Darstellungen eines medianen Schnitts in Axialebene durch einen Quick Connector mit eingestecktem Leitungsstutzen und geöffnetem Ventil (Fig. 4) nach einem zweiten Ausführungsbeispiel der Erfindung; Fig. 5 gibt eine Ausschnittsdarstellung aus Fig. 4 des Ventilabschnitts in geöffneter Stellung wieder und erläutert die Funktion der Ventileinheit mit durchströmbarem Ventilkörper genauer. Dieses zweite Ausführungsbeispiel entspricht in wesentlichen Punkten dem ersten Ausführungsbeispiel, wobei Bezugszeichen sowie Aussagen des ersten Ausführungsbeispiels auch für das zweite Ausführungsbeispiel zutreffen. Um Wiederholungen zu vermeiden, wird deshalb nur auf Unterschiede und Besonderheiten des zweiten Ausführungsbeispiels eingegangen.

Das zweite Ausführungsbeispiel unterscheidet sich vom ersten Ausführungsbeispiel durch die Konstruktion der Ventileinheit. Diese besteht anstelle eines einteiligen starren Ventilkörpers 17 aus einem hohlen durchströmbaren Ventilkörper 17, der in der dargestellten Weise an seinem zylindrischen Grundelement 22 mit drei daran angelenkten Sektoreinrichtungen 24 die in geschlossenem Zustand die Form eines Kegelstumpfes 26, der mit dem spitzeren Ende auf dem zylindrischen Grundelement 22 aufsitzt und am stumpfen Ende mit einem basengleichen, invers angeordneten, d.h. an der Kegelbasis gespiegelten, Kegel 27 verbunden ist. Die durch die Sektoreinrichtungen 24 in geschlossenem Zustand gebildete Außenform wird in der weiteren Folge als Doppelkegelstruktur 26,27 bezeichnet. Diese Doppelkegelstruktur 26,27 wird durch drei zueinander im 120° Winkel stehende, von der Mittelachse A2 ausgehende Radialebenen in drei Doppelkegelstruktursektoren oder Sektoreinrichtungen 24 geteilt, die über Biegeabschnitte 23, mit dem Grundelement 22 verbunden sind. Diese Sektoreinrichtungen 24 bilden im geschlossenen Zustand zur jeweils angrenzenden Sektoreinrichtung 24 Dichtkanten 25 aus. Außerdem ist die Doppelkegelstruktur 26,27 des geschlossenen Ventilkörpers 17 durch Zug des mit dem Ventilkörper verbundenen Stößels 10 in den Ventilsitz bewegbar, wo der durch den Kegelstumpfabschnitt 26 gebildete Konus dieser Doppelkegelstruktur 26,27 mit dem Ventilsitz 15 ebenfalls einen dichtenden Kontakt herstellt.

Durch Abheben dieser Doppelkegelstruktur 26,27 aus dem Ventilsitz 15 öffnen sich die aufgrund ihrer dreidimensionalen Struktur vorgespannten Biegeabschnitte 23 selbsttätig und geben den Strömungsquerschnitt frei.

Durch seine Formgebung bildet der am Grundelement 22 angelenkte Kegelstumpfabschnitt 26 der Doppelkegelstruktur 26,27 einen Konus aus, durch den sich die Doppelkegelstruktur 26,27 durch Ziehen in den Ventilsitz 15 mit einer Radialkraft beaufschlagen und dicht schließen lässt, wobei gleichzeitig ein dichter Sitz Doppelkegelstruktur 26,27 im Ventilsitz 15 hergestellt wird.

Durch eine derartige Ventilkonstruktion ist es möglich, ein Ventil mit geradem Durchgang und besonders geringem Durchströmungswiderstand herzustellen.

Zu den vorgenannten Ausführungsbeispielen sind weitere Varianten möglich und sinnvoll, deren wichtigste exemplarisch im Folgenden mit kurzen Erläuterungen dargestellt sind:
Das Kupplungsgehäuse 1 der Kupplungseinrichtung kann anstelle eines bereits beim Herstellungsprozess gekrümmten Abschnitts einen abwinkelbaren oder flexiblen Abschnitt enthalten, der beispielsweise als Gelenkabschnitt oder durch einen flexiblen, z.B. wellrohrähnlichen Abschnitt hergestellt werden kann. Das Kupplungsgehäuse 1 wird dabei bevorzugt aus einem polymeren oder metallischen Werkstoff gefertigt, der u.a. an Einsatzbedingungen (Temperatur, mechanische Belastungen) und Medienbeständigkeit angepasst ausgewählt wird.

Zur Kraftübertragung und Umlenkung sind ebenfalls eine Vielzahl von Möglichkeiten denkbar. So sind durch die Ansprüche eine Vielzahl von Werkstoffen und Ausführungsarten für die Druckübertragungseinrichtung 10 bereits angegeben. Insbesondere bieten sich hierfür die in den Ansprüchen angegebenen Varianten unter Einsatz polymerer oder metallischer Werkstoffe oder einer entsprechenden Hybridkonstruktion an. Ebenso ist auch denkbar, anstelle eines Stößels 10 mit flexiblem Stößelabschnitt, zumindest im Schubumlenkungsbereich die Schubumlenkungseinrichtung 11 in Axialrichtung durch mehrere in Anlage bringbare Schubteilelemente auszuführen, die z.B. im Wesentlichen ringförmig oder torusförmig sind oder im Wesentlichen kugel- oder ellipsoidförmig sind und zumindest einen Durchflusskanal 8 aufweisen und/oder im Umfangsbereich angeordnete und umströmbare Rippen tragen und so die Druckkraft, die beim Einstecken des Leitungsstutzens 2 eingebracht wird, auf die Ventileinrichtung übertragen, ohne den Durchströmungskanal 8 zu verschließen. Durch Gleit- und/oder Schutzüberzüge kann dabei das Anwendungsspektrum für die Druckübertragungseinrichtung 10 sinnvoller Werkstoffe erhöht werden, indem insbesondere die Medienbeständigkeit und Gleiteigenschaften verbessert werden können.

Neben der im ersten Ausführungsbeispiel genannten dreiflügeligen Stößelkonstruktion aus einem flexiblen medienbeständigen Kunststoff kann die Druckübertragungseinrichtung 10, je nach Anwendungserfordernissen und Vorgaben, auch ein schlauchförmiges innen durchströmbares Element, z.B. einen Kunststoffschlauch, aufweisen, das weiterhin optional zur Erhöhung der Flexibilität transversal geführte Einschnitte aufweisen kann, die bevorzugt von einer Mantellinie oder zwei einander diametral gegenüberliegenden Mantellinien auf die Mittellinie zulaufen und bevorzugt als V-förmige Einkerbungen ausgeführt sind, wodurch sich die Flexibilität beträchtlich erhöhen lässt. Im Falle krümmungsinnenseitig eingebrachter V-förmiger Einkerbungen lässt sich durch eine derartige Konstruktion gleichzeitig der Biegeradius in Minimumrichtung begrenzen, indem die Einkerbungsflanken der V-förmigen Abschnitte die Biegung des flexiblen Stößelabschnitts auf denjenigen Krümmungsradius begrenzen, bei dem die Einkerbungsflanken aneinander anschlagen. Als andere Ausführungsvariante zum Einsatz als Druckübertragungseinrichtung 10 wäre auch ein schraubenfederartiges Element, bevorzugt aus einem metallischen oder polymeren Werkstoff, denkbar, das eine sehr hohe Flexibilität aufweisen und gleichzeitig die Druckkraft wirksam übertragen kann, wenn deren Windungen sich auf Druck gegeneinander abstützen. Ein solches schraubenfederartiges Element kann dabei für sich alleine als Druckübertragungseinrichtung 10 fungieren oder in Verbindung beispielsweise mit einem innenliegenden, z.B. schlauchförmigen oder profilierten Stößelelement.

Ebenfalls wäre vorstellbar, z.B. einem als Druckübertragungseinrichtung 10 fungierenden Schlauchelement zur Stabilisierung Abstandselemente z.B. in Form von voneinander beabstandeten metallischen Ringen beizuordnen, die diese Schlauchelemente stabilisieren und die in ähnlicher Weise, wie die vorerwähnten V-förmigen Einschnitte, die Biegung auf denjenigen Biegungsradius begrenzen können, bei dem die Metallringe krümmungsinnenseitig miteinander in Anlage kommen.

Für bestimmte Anwendungsfälle kann es sinnvoll sein, die Druckübertragungseinrichtung 10 innerhalb des Durchströmungskanals 8 durch Stützeinrichtungen zu stabilisieren, die sich gegen die Innenwand des Durchströmungskanals 8 des Kupplungsgehäuses 1 abstützen, um Ausweichbewegung der Druckübertragungseinrichtung 10 z.B. bei Druckausübung zu verhindern. Hierbei wären z.B. Gleitelemente, wie auf die Druckübertragungseinrichtung aufschiebbare Gleitringe, denkbar. Ebenso ist es auch möglich, entweder die Druckübertragungseinrichtung 10 oder die Innenwand des Hohlraumabschnitts des Durchströmungskanals 8 des Kupplungsgehäuses 1, der die Druckübertragungseinrichtung 10 umschließt, mit Gleitelementen, Gleit-Abstandselementen oder Gleit-Führungselementen zu versehen, wodurch sich eine Reibungsreduzierung, Beabstandungsfunktion, Wegbegrenzung und/oder Drehsicherung erzielen lässt. Solche Abschnitte können z.B. als in axialer Richtung durchlaufende oder unterbrochene Rippen oder Flügel ausgeführt sein, und auch in dafür vorgesehenen, komplementären Nuten am jeweils anderen Bauteil entlanggeführt werden.

Der vorerwähnte Anschlagring 9 ist nicht in jedem Fall obligatorisch, jedoch zumeist vorteilhaft und dient dem Verschleißschutz und der sicheren Druckübertragung zwischen Leitungsstutzen 2 und Druckübertragungseinrichtung 10. Dabei soll das Anschlagelement 9 einen möglichst sicheren Kontakt mit dem Leitungsstutzen ausbilden und gleichzeitig den Durchströmungsweg vom Leitungsstutzen 2 in dem Durchströmungskanal 8 möglichst wenig beeinträchtigen. Zweckmäßigerweise wird das Anschlagelement 9 auch an die Konstruktion der Druckübertragungseinrichtung 10 angepasst. Das heißt, dass im Falle des vorbeschriebenen dreiflügeligen Stößels eventuell eine ebenfalls mit drei Radialflügeln oder -rippen ausgestattete und in Umfangsrichtung mit einem zylindrischen Stabilisierungsabschnitt umgebene Anschlageinrichtung 9 sinnvoll sein könnte. Im Falle einer hohlen durchströmbaren Druckübertragungseinrichtung 10 kann es dagegen vorteilhafter sein, die Anschlageinrichtung 9 mit einer großen axialen Zentralöffnung zu versehen, die mit der hohlen Druckübertragungseinrichtung 10 in Flucht angeordnet ist. Wie die Druckübertragungseinrichtung 10 kann auch die Anschlageinrichtung 9 am äußeren Umfang in ähnlicher Weise zusätzlich mit Gleit-und/oder Führungsabschnitten versehen sein.

In einer anderen Variante der Kupplungseinrichtung kann es sinnvoll sein, die Druckfeder 14 durch eine Zugfeder zu ersetzen, z.B. wenn die Druckübertragungseinrichtung 10 ausschließlich zur Druckübertragung vorgesehen oder zur Übertragung von Zugkräften ungeeignet ist und deshalb nicht zum Zurückziehen des Ventilkörpers 17 in den Ventilsitz 15 genutzt werden soll oder kann.

In der anderen Variante der Kupplungseinrichtung endet die Kupplungseinrichtung nicht in einem (endständigen) Ventilabschnitt 18, sondern die Ventileinrichtung ist inmitten einer längeren Leitungseinrichtung angeordnet.

Für bestimmte andere Anwendungserfordemisse kann eine Variante der Kupplungseinrichtung sinnvoll sein, bei der die Ventileinrichtung räumlich sehr weit vom Verbindungsabschnitt 4 getrennt angeordnet ist. So wäre es z.B. denkbar, eine Kraftstoffleitung mit einer solchen Kupplungseinrichtung auszustatten, bei der die Sperrstelle aus dem Motorraum heraus verlagert und tankseitig angeordnet ist, wodurch sich Sicherheitsvorteile im Falle eines Unfalls oder Motorraumbrandes sowie Platzvorteile für die Konstruktion der Ventileinheit ergeben können. Bezüglich des vorgenannten Sicherheitsaspekts wäre es denkbar, durch die geometrische Gestaltung von Kupplungseinrichtung und Leitungsverlauf bzw. die Materialwahl und gegebenenfalls auch Sollbruchstellen, eine Kupplungseinrichtung mit ausgelagerter Ventileinheit zu fertigen, die im Falle eines Unfalls oder Motorraumbrandes einen deformationsbedingten bzw. temperaturbedingten Selbstschluss durchführt und die so die Kraftstoffzufuhr unterbricht.

Auch bezogen auf Konstruktion und Gestaltung des Ventilkörpers 17 des zweiten Ausführungsbeispiels sind weitere Varianten möglich und sinnvoll, deren wichtigste exemplarisch im Folgenden mit kurzen Erläuterungen dargestellt sind:
Anstelle eines hohlen Ventilkörpers 17, wie in obigem Ausführungsbeispiel dargestellt, kann es z.B. für den Einsatz in Hochdruckabsperreinrichtungen sinnvoll oder notwendig sein, den Ventilkörper 17 mit massiven Sektoreinrichtungen 24 z.B. aus einem metallischen Werkstoff auszustatten, so dass im geschlossenen Zustand einen großflächigen Dichtschluss zwischen den Sektoreinrichtungen 24 erzielt und eine hohe Kantenbelastung der Dichtkanten 25, wie sie im Falle eines hohlen Dichtkörpers 17 auftritt, vermieden wird.

Auch bezüglich der geometrischen Ausgestaltung des Ventilkörpers 17 sind - je nach Einsatzzweck und Konstruktionsart des Ventils - verschiedene Varianten denkbar. So kann es zweckmäßig sein, den Ventilkörper 17 mit einer polyedrischen Struktur zu versehen, z.B. um diesen mittels gerader Scharnierelemente 23 am Grundkörper 22 der Ventileinheit zu befestigen, wofür sich besonders eine Doppelpyramidenstruktur aus zwei basengleichen dreidimensionalen Simplices oder Tetraedern empfiehlt, da hierbei die Sektoreinrichtungen 24 die besten Selbstzentrierungseigenschaften aufweisen und die Zahl der Scharniere 23 reduziert ist. Außerdem wird ein solcher Ventilkörper 17 gleichzeitig im (polygonalen) Ventilsitz 15 in Rotationsrichtung (syngonal) justiert bzw. ausgerichtet.

In Hinblick auf die Dichtungseigenschaften des Kontaktbereiches zwischen Ventilsitz 15 und Ventilkörper 17 ist hingegen in transversaler Schnittebene ein kreisförmiger Kontakt vorteilhaft. Dies kann durch einen Ventilkörper 17 mit Doppelkegelstruktur 26,27 oder durch den Übergang des Ventilkörpers 17 in Axialrichtung in transversaler Schnittebene von einem polygonalen Querschnitt (im Scharnierbereich) in einen kreisförmigen Querschnitt (im Bereich des Dichtsitzes 15 des Ventilkörpers 17 im Ventilsitz 15) erzielt werden. Ein solcher Ventilkörper 17, der z.B. aus einem polymeren Werkstoff im Spritzgussverfahren einstückig zusammen mit dem Grundelement des Ventilkörpers 22 gefertigt werden kann, kann dabei mit Folienscharnieren oder Biegeabschnitten 23 ausgestattet sein, und bereits im Herstellungsprozess mit einer Vorspannung versehen werden, die den Ventilkörper 17 öffnet und so ein Verharren der Sektoreinrichtungen 24 in geschlossener Position nach dem Abheben des Ventilkörpers 17 aus dem Ventilsitz 15 verhindert.

In manchen Anwendungsfällen kann es auch sinnvoll sein, in medianer Schnittebene den Ventilkörper 17 nicht linear-konisch, sondern mit einem anderen Kurvenverlauf zu versehen, wodurch sich beispielsweise andersförmige Rotationskörper mit nichtdopplekegelstrukturförmiger Geometrie mit z.B. ellipsoiden, paraboloiden oder hyperboloiden Teilflächen ergeben können. Eine solche Formgebung bietet sich z.B. an, um mit einer kurzen Hubbewegung der Zug-Druck-Betätigungseinrichtung Ventilöffnung bzw. Ventilschluss durchzuführen, die Schließkräfte der Sektoreinrichtungen 24 zu erhöhen, oder die Wiederöffnung des Ventils - je nach Ausbildung des Kontaktwinkels zwischen Ventilkörper 17 und Ventilsitz 15 - zu erleichtern, zu erschweren oder zu verhindern. Außerdem können durch eine solche Gestaltung des Ventilkörpers 17 Öffnungswinkel und Durchflussquerschnitt durch den geöffneten Ventilkörper 17 optimiert werden.

Als weitere Variante ist es auch denkbar, die Sektoreinrichtungen 24 nicht mit einem Grundelement 22 zu verbinden, sondern z.B. direkt an der Innenwand des Durchflusskanals 8 oder an der Betätigungsvorrichtung anzulenken, um so das Grundelement 22 einzusparen oder die Flexibilität der Sektoreinrichtungen 24 zu erhöhen.

## Patentansprüche

1. Kupplungseinrichtung zum Verbinden von Leitungseinrichtungen, vorzugsweise Quick Connector, mit einem Kupplungsgehäuse, das eine Verbindungseinrichtung, die mit einem Endabschnitt einer Leitungseinrichtung (2) oder einer zweiten Verbindungseinrichtung verbindbar ist, und einen Ventilkörper (17) aufweist, welcher bei Zusammenführen des Endabschnitts der Leitungseinrichtung (2) oder der zweiten Verbindungseinrichtung mit dem Kupplungsgehäuse (1) von einer geschlossenen Stellung in eine geöffnete Stellung überführbar ist, wobei der Ventilkörper (17) mittels einer Kraftumlenkungseinrichtung (10) durch Zusammenführen des Endabschnitts der Leitungseinrichtung (2) oder der zweiten Verbindungseinrichtung mit dem Kupplungsgehäuse (1) betätigbar ist, **dadurch gekennzeichnet, dass** das Kupplungsgehäuse (1) der Kupplungseinrichtung zwischen einem Verbindungsabschnitt (4) und einem Ventilabschnitt (18) einen flexiblen Abschnitt enthält und eine verbindungseinrichtungsseitige Achse (A1) und eine ventilseitige Achse (A2) der Kupplungseinrichtung gegeneinander verschwenkbar und/oder verschiebbar sind:

2. Kupplungseinrichtung zum Verbinden von Leitungseinrichtungen nach zumindest einem der vorangegangenen Ansprüche, **dadurch gekennzeichnet, dass** das Kupplungsgehäuse (1) eine Aufnahme (5) aufweist, in die der Endabschnitt der Leitungseinrichtung (2) einsteckbar und in der dieser Endabschnitt (2) in eingesteckter Stellung befestigbar ist und der Ventilkörper (17) vorzugsweise selbsttätig schließend ist und mittels der Kraftumlenkungseinrichtung (10) durch Einführen der Leitungseinrichtung (2) in die geöffnete Stellung überführbar ist.

3. Kupplungseinrichtung zum Verbinden von Leitungseinrichtungen nach zumindest einem der vorangegangenen Ansprüche, **dadurch gekennzeichnet, dass** das Kupplungsgehäuse (1) einen abgewinkelten oder gekrümmten Durchströmungskanal (8) aufweist.

4. Kupplungseinrichtung zum Verbinden von Leitungseinrichtungen nach zumindest einem der vorangegangenen Ansprüche, **dadurch gekennzeichnet, dass** die verbindungseinrichtungsseitige Achse (A1) und die ventilseitige Achse (A2) der Kupplungseinrichtung zueinander im Winkel stehen und die beiden Achsen vorzugsweise einen 90° Winkel einschließen.

5. Kupplungseinrichtung zum Verbinden von Leitungseinrichtungen nach zumindest einem der vorangegangenen Ansprüche, **dadurch gekennzeichnet, dass** die Kraftumlenkungseinrichtung eine Druckübertragungseinrichtung (10) aufweist.

6. Kupplungseinrichtung zum Verbinden von Leitungseinrichtungen nach zumindest einem der vorangegangenen Ansprüche, **dadurch gekennzeichnet, dass** die Druckübertragungseinrichtung (10) zumindest abschnittsweise flexibel ist.

7. Kupplungseinrichtung zum Verbinden von Leitungseinrichtungen nach zumindest einem der vorangegangenen Ansprüche, **dadurch gekennzeichnet, dass** die Druckübertragungseinrichtung (10) im Lumen des Durchströmungskanals (8) des Kupplungsgehäuses (1) und im Durchströmungsweg zwischen dem Verbindungsabschnitt (4) für den Endabschnitt der Leitungseinrichtung (2) oder die zweite Verbindungseinrichtung und dem Ventilkörper (17) angeordnet ist.

8. Kupplungseinrichtung zum Verbinden von Leitungseinrichtungen nach zumindest einem der vorangegangenen Ansprüche, **dadurch gekennzeichnet, dass** das Druckübertragungseinrichtung (10) innen hohl und durchströmbar ausgeführt ist.

9. Kupplungseinrichtung zum Verbinden von Leitungseinrichtungen nach zumindest einem der vorangegangenen Ansprüche, **dadurch gekennzeichnet, dass** die Druckübertragungseinrichtung (10) eine zumindest abschnittsweise flexible Schubumlenkungseinrichtung (11) enthält.

10. Kupplungseinrichtung zum Verbinden von Leitungseinrichtungen (11) nach zumindest einem der vorangegangenen Ansprüche, **dadurch gekennzeichnet, dass** die Schubumlenkungseinrichtung einen metallischen Werkstoff aufweist.

11. Kupplungseinrichtung zum Verbinden von Leitungseinrichtungen nach zumindest einem der vorangegangenen Ansprüche, **dadurch gekennzeichnet, dass** die Schubumlenkungseinrichtung (11) eine Mehrzahl von Drähten oder Filamenten enthält.

12. Kupplungseinrichtung zum Verbinden von Leitungseinrichtungen nach zumindest einem der vorangegangenen Ansprüche, **dadurch gekennzeichnet, dass** die Schubumlenkungseinrichtung (11) einen glasartigen oder keramischen Werkstoff aufweist.

13. Kupplungseinrichtung zum Verbinden von Leitungseinrichtungen nach zumindest einem der vorangegangenen Ansprüche, **dadurch gekennzeichnet, dass** die Schubumlenkungseinrichtung (11) einen Gleit- und/oder Schutzüberzug aufweist.

14. Kupplungseinrichtung zum Verbinden von Leitungseinrichtungen nach zumindest einem der vorangegangenen Ansprüche, **dadurch gekennzeichnet, dass** die Schubumlenkungseinrichtung (11) in Axialrichtung eine Mehrzahl miteinander in Anlage bringbarer Schubteilelemente umfasst.

15. Kupplungseinrichtung zum Verbinden von Leitungseinrichtungen nach zumindest einem der vorangegangenen Ansprüche, **dadurch gekennzeichnet, dass** die Schubteilelemente im Wesentlichen ringförmig oder torusförmig sind oder im Wesentlichen kugel- oder ellipsoidförmig sind und zumindest einen Durchflusskanal und/oder im Umfangsbereich angeordnete und umströmbar Rippen aufweisen.

16. Kupplungseinrichtung zum Verbinden von Leitungseinrichtungen nach zumindest einem der vorangegangenen Ansprüche, **dadurch gekennzeichnet, dass** die Schubumlenkungseinrichtung (11) einen polymeren Werkstoff aufweist, bevorzugt einen Thermoplasten, ein thermoplastisches Elastomer oder ein Elastomer.

17. Kupplungseinrichtung zum Verbinden von Leitungseinrichtungen nach zumindest einem der vorangegangenen Ansprüche, **dadurch gekennzeichnet, dass** die Druckübertragungseinrichtung (10) einstückig mit der Schubumlenkungseinrichtung (11) ausgebildet ist.

18. Kupplungseinrichtung zum Verbinden von Leitungseinrichtungen nach zumindest einem der vorangegangenen Ansprüche, **dadurch gekennzeichnet, dass** die Schubumlenkungseinrichtung (11) Stabilisierungseinrichtungen aus einem metallischen oder polymeren Werkstoff, bevorzugt aus einem metallischen Werkstoff, aufweist, die vorzugsweise zur Aufnahme axialer Zug- und/oder Druckkräfte bestimmt sind.

19. Kupplungseinrichtung zum Verbinden von Leitungseinrichtungen nach zumindest einem der vorangegangenen Ansprüche, **dadurch gekennzeichnet, dass** die Stabilisierungseinrichtungen (11) Abstandselemente zur Druckaufnahme und/oder Biegungsbegrenzung enthalten.

20. Kupplungseinrichtung zum Verbinden von Leitungseinrichtungen nach zumindest einem der vorangegangenen Ansprüche, **dadurch gekennzeichnet, dass** die Schubumlenkungseinrichtung (11) eine schraubenfederartiges Element, bevorzugt aus einem metallischen oder polymeren Werkstoff aufweist, deren Windungen bestimmt sind, sich auf Druck gegeneinander abzustützen.

21. Kupplungseinrichtung zum Verbinden von Leitungseinrichtungen nach zumindest einem der vorangegangenen Ansprüche, **dadurch gekennzeichnet, dass** die Druckübertragungseinrichtung (10) zumindest abschnittsweise einen flexiblen, schubsteifen Vollzylinder (20) aufweist, dessen Durchmesser bevorzugt kleiner als der Halbmesser des Durchströmungskanals ist, und von vorzugsweise drei bis acht, in Radialebenen und voneinander in Umfangsrichtung gleichbeabstandet angeordneten Stütz- und Stabilisierungsrippen (21) umgeben ist.

22. Kupplungseinrichtung zum Verbinden von Leitungseinrichtungen nach zumindest einem der vorangegangenen Ansprüche, **dadurch gekennzeichnet, dass** die Druckübertragungseinrichtung (10) transversal geführte Einschnitte aufweist, die bevorzugt von einer Mantellinie oder zwei, einander diametral gegenüberliegenden Mantellinien auf die Mittellinie zulaufen und bevorzugt als V-förmige Einkerbungen ausgeführt sind.

23. Kupplungseinrichtung zum Verbinden von Leitungseinrichtungen nach zumindest einem der vorangegangenen Ansprüche, **dadurch gekennzeichnet, dass** die Druckübertragungseinrichtung (10) Stützeinrichtungen (12) aufweist, die gegen die Innenwand des Durchströmungskanals (8) des Kupplungsgehäuses (1) abstützbar sind.

24. Kupplungseinrichtung zum Verbinden von Leitungseinrichtungen nach zumindest einem der vorangegangenen Ansprüche, **dadurch gekennzeichnet, dass** die Stützeinrichtungen (12) die Druckübertragungseinrichtung umgebenden Gleitelemente, vorzugsweise Gleitringe, umfassen.

25. Kupplungseinrichtung zum Verbinden von Leitungseinrichtungen nach zumindest einem der vorangegangenen Ansprüche, **dadurch gekennzeichnet, dass** die Stützeinrichtungen (12) Gleitabschnitte, Gleit-Abstandsabschnitte oder Gleit-Führungsabschnitte umfassen, die an die Druckübertragungseinrichtung (10) angeformt sind und an der Innenwand des Durchströmungskanals (8) des Kupplungsgehäuses (1) oder besonderen, insbesondere nutartigen, Abschnitten derselben gleitend in Anlage bringbar sind und die der Reibungsreduzierung, Beabstandung, Wegbegrenzung und/oder Drehsicherung dienen.

26. Kupplungseinrichtung zum Verbinden von Leitungseinrichtungen nach zumindest einem der vorangegangenen Ansprüche, **dadurch gekennzeichnet, dass** der Hohlraumabschnitt des Durchströmungskanals (8) des Kupplungsgehäuses (1), der die Druckübertragungseinrichtung (10) umschließt, an seiner Innenwand Gleitelemente, Gleit-Abstandselemente oder Gleit-Führungselemente aufweist, die an der Druckübertragungseinrichtung (10) oder an mit dieser verbundenen Einrichtungen oder besonderen, insbesondere nutartigen, Abschnitten derselben gleitend in Anlage bringbar sind und der Reibungsreduzierung, Beabstandung, Wegbegrenzung und/oder Drehsicherung dienen.

27. Kupplungseinrichtung zum Verbinden von Leitungseinrichtungen nach zumindest einem der vorangegangenen Ansprüche, **dadurch gekennzeichnet, dass** die Kupplungseinrichtung eine Anschlageinrichtung (9) für den Endabschnitt der Leitungseinrichtung (2) oder die zweite Verbindungseinrichtung aufweist, die mit dem Endabschnitt der Leitungseinrichtung (2) oder der zweiten Verbindungseinrichtung bei Zusammenführen desselben/derselben mit dem Kupplungsgehäuse (1) mit diesem/dieser in Anlage bringbar und verschiebbar ist und bei Verbindung des Endabschnitts der Leitungseinrichtung (2) oder der zweiten Verbindungseinrichtung mit dem Kupplungsgehäuse (1) zwischen dem Endabschnitt der Leitungseinrichtung (2) oder der zweiten Verbindungseinrichtung und der Druckübertragungseinrichtung (10) angeordnet ist.

28. Kupplungseinrichtung zum Verbinden von Leitungseinrichtungen nach zumindest einem der vorangegangenen Ansprüche, **dadurch gekennzeichnet, dass** die Anschlageinrichtung (9) eine axiale Zentralöffnung aufweist, die vorzugsweise mit der Öffnung einer hohlen Druckübertragungseinrichtung (10) in Flucht angeordnet ist.

29. Kupplungseinrichtung zum Verbinden von Leitungseinrichtungen nach zumindest einem der vorangegangenen Ansprüche, **dadurch gekennzeichnet, dass** die Anschlageinrichtung (9) ein bis acht, vorzugsweise drei oder vier radial angeordnete Rippen oder Stege aufweist, die gleichabständig über den Umfang verteilt sind und die an der Innenwand des Kupplungsgehäuses (1) abstützbar und/oder in Führungseinrichtungen der Innenwand des Kupplungsgehäuses (1) führbar sind.

30. Kupplungseinrichtung zum Verbinden von Leitungseinrichtungen nach zumindest einem der vorangegangenen Ansprüche, **dadurch gekennzeichnet, dass** die Schubumlenkungseinrichtung (11) federelastische Eigenschaften aufweist und dafür vorgesehen ist, den Ventilkörper (17) in Schließrichtung desselben mit einer Rückstellkraft zu beaufschlagen und den Ventilkörper (17) bei Entfernen des Endabschnitts der Leitungseinrichtung (2) oder der zweiten Verbindungseinrichtung aus dem Verbindungsbereich (4) des Kupplungsgehäuses (1) von der geöffneten Stellung in die geschlossene Stellung zu überführen.

31. Kupplungseinrichtung zum Verbinden von Leitungseinrichtungen nach zumindest einem der vorangegangenen Ansprüche, **dadurch gekennzeichnet, dass** die Kupplungseinrichtung eine Rückstelleinrichtung (14) umfasst, welche den Ventilkörper (17) in Schließrichtung desselben mit einer Rückstellkraft beaufschlagt und dafür vorgesehen ist, den Ventilkörper (17) bei Entfernen des Endabschnitts der Leitungseinrichtung (2) oder der zweiten Verbindungseinrichtung aus dem Verbindungsbereich (4) des Kupplungsgehäuses (1) von der geöffneten Stellung in die geschlossene Stellung zu überführen.

32. Kupplungseinrichtung zum Verbinden von Leitungseinrichtungen nach zumindest einem der vorangegangenen Ansprüche, **dadurch gekennzeichnet, dass** die Rückstelleinrichtung eine Schraubenfeder (14) aufweist.

33. Kupplungseinrichtung zum Verbinden von Leitungseinrichtungen nach zumindest einem der vorangegangenen Ansprüche, **dadurch gekennzeichnet, dass** die Schraubenfeder (14), innerhalb des Durchströmungskanal (8) des Kupplungsgehäuses (1) und zumindest überwiegend in einem Abschnitt angeordnet ist, der im Durchströmungskanal (8) zwischen dem Verbindungsbereich (4) des Kupplungsgehäuses (1) für den Endabschnitt der Leitungseinrichtung (2) oder die zweite Verbindungseinrichtung und dem Ventilkörper (17), bevorzugt in Schließrichtung des Ventilkörpers (17) vor dem Ventilkörper (17) und diesem benachbart, angeordnet ist.

34. Kupplungseinrichtung zum Verbinden von Leitungseinrichtungen nach zumindest einem der vorangegangenen Ansprüche, **dadurch gekennzeichnet, dass** die Schraubenfeder (14) innerhalb des Durchströmungskanals (8) des Kupplungsgehäuses (1), zumindest Abschnitte der Druckübertragungseinrichtung (10) umschließend, zwischen der Innenwand des Kupplungsgehäuses (1) und der Druckübertragungseinrichtung (10) angeordnet ist.

35. Kupplungseinrichtung zum Verbinden von Leitungseinrichtungen nach zumindest einem der vorangegangenen Ansprüche, **dadurch gekennzeichnet, dass** die Schraubenfeder (14) eine Zugfeder ist.

36. Kupplungseinrichtung zum Verbinden von Leitungseinrichtungen nach zumindest einem der vorangegangenen Ansprüche, **dadurch gekennzeichnet, dass** die Schraubenfeder eine Druckfeder (14) ist und zwischen einem mit der Druckübertragungseinrichtung (10) mechanisch verbundenen Anschlagelement (13) und einer davon axial beabstandeten und im Bezug auf dieses Anschlagelement (13) in Durchströmungsrichtung näher am Ventilkörper (17) gelegenen gehäuseseitigen Auflage (16) einspannbar ist, wobei der Ventilkörper (17) über die Druckübertragungseinrichtung (10) durch Zug in Schließstellung überführbar und die Druckfeder (14) bei Zusammenführen des Endabschnitts der Leitungseinrichtung (2) oder der zweiten Verbindungseinrichtung mit dem Kupplungsgehäuse (1) auf Druck belastbar ist.

37. Kupplungseinrichtung zum Verbinden von Leitungseinrichtungen nach zumindest einem der vorangegangenen Ansprüche, **dadurch gekennzeichnet, dass** die gehäuseseitigen Auflage (16) der Druckfeder (14) dem Ventilsitzes (15) benachbart angeordnet ist.

38. Kupplungseinrichtung zum Verbinden von Leitungseinrichtungen nach zumindest einem der vorangegangenen Ansprüche, **dadurch gekennzeichnet, dass** der Ventilkörper (17) einteilig und starr aufgebaut ist.

39. Kupplungseinrichtung zum Verbinden von Leitungseinrichtungen nach zumindest einem der vorangegangenen Ansprüche, **dadurch gekennzeichnet, dass** der Ventilkörper (17) aus einem polymeren, metallischen, glasartigen oder keramischen Werkstoff besteht.

40. Kupplungseinrichtung zum Verbinden von Leitungseinrichtungen nach zumindest einem der vorangegangenen Ansprüche, **dadurch gekennzeichnet, dass** der Ventilkörper (17) einen im Wesentlichen scheibenförmigen, konusförmigen, paraboloiden, birnenförmigen oder pilzförmigen Abschnitt enthält, welcher mit dem Ventilsitz (15) in Anlage bringbar ist.

41. Kupplungseinrichtung zum Verbinden von Leitungseinrichtungen nach zumindest einem der vorangegangenen Ansprüche, **dadurch gekennzeichnet, dass** der Ventilkörper (17) mindestens eine Ringdichtung aufweist.

42. Kupplungseinrichtung zum Verbinden von Leitungseinrichtungen nach zumindest einem der vorangegangenen Ansprüche, **dadurch gekennzeichnet, dass** der Ventilkörper (17) bewegbare Sektoreinrichtungen (24) umfasst, welche Dichtkanten oder Dichtflächen aufweisen, über die in einem geschlossenen Zustand ein dichtender Kontakt der Sektoreinrichtung (24) zu angrenzenden Dichtkanten oder Dichtflächen (25) herstellbar ist, und diese Sektoreinrichtungen (24) beim Überführen des Ventilkörpers (17) in die geöffnete Stellung zumindest abschnittsweise in Radialrichtung von der Mittelachse (A2) entfernbar sind und einen Durchströmungsquerschnitt freigeben.

43. Kupplungseinrichtung zum Verbinden von Leitungseinrichtungen nach zumindest einem der vorangegangenen Ansprüche, **dadurch gekennzeichnet, dass** im geschlossenen Zustand ein dichtender Kontakt zwischen den Dichtkanten oder Dichtflächen (25) einander benachbarter Sektoreinrichtung (24) herstellbar ist und sich die in geschlossenem Zustand aneinander anliegenden Dichtkanten oder Dichtflächen (25) einander benachbarter Sektoreinrichtungen (24) beim Überführen des Ventilkörpers (17) in die geöffnete Stellung zumindest abschnittsweise in Umfangsrichtung voneinander entfernen.

44. Kupplungseinrichtung zum Verbinden von Leitungseinrichtungen nach zumindest einem der vorangegangenen Ansprüche, **dadurch gekennzeichnet, dass** der Ventilkörper (17) mit mehreren Sektoreinrichtungen (24) im geschlossenen Zustand dichtend mit einer Außenkontur des Ventilkörpers (17) mit dem Ventilsitz (15) in Anlage bringbar ist.

45. Kupplungseinrichtung zum Verbinden von Leitungseinrichtungen nach zumindest einem der vorangegangenen Ansprüche, **dadurch gekennzeichnet, dass** der Ventilkörper (17) hohl ist, wobei der Ventilkörper (17) im geschlossenen Zustand eine in Richtung eines Öffnungsendes (O) geschlossene Hohlform ausgebildet, die eine Öffnung in Richtung eines Nicht-Öffnungsendes (C) des Ventilkörpers (17) aufweist, und dessen Sektoreinrichtungen Dichtkanten (25) ausbilden, durch die im geschlossenen Zustand ein dichtender Kontakt zwischen den Sektoreinrichtungen (24) herstellbar ist.

46. Kupplungseinrichtung zum Verbinden von Leitungseinrichtungen nach zumindest einem der vorangegangenen Ansprüche, **dadurch gekennzeichnet, dass** die Sektoreinrichtungen (24) relativ zu einem Ventilsitz (15) in Axialrichtung bewegbar sind, wobei die Sektoreinrichtungen (24) durch Gegenschieben gegen den Ventilsitz (15) radial aufeinander zubewegbar und schließbar sind und durch Entfernen vom Ventilsitz (15) öffenbar sind.

47. Kupplungseinrichtung zum Verbinden von Leitungseinrichtungen nach zumindest einem der vorangegangenen Ansprüche, **dadurch gekennzeichnet, dass** die Sektoreinrichtungen (24) des Ventilkörpers (17) durch Ziehen des Ventilkörpers (17) in den Ventilsitz (15) schließbar sind.

48. Kupplungseinrichtung zum Verbinden von Leitungseinrichtungen nach zumindest einem der vorangegangenen Ansprüche, **dadurch gekennzeichnet, dass** der Ventilkörper (17) mit der Druckübertragungseinrichtung verbindbar ist, durch die der Ventilkörper (17) relativ zum Ventilsitz bewegbar ist.

49. Kupplungseinrichtung zum Verbinden von Leitungseinrichtungen nach zumindest einem der vorangegangenen Ansprüche, **dadurch gekennzeichnet, dass** der rotationssymmetrische oder polyedrische, achsensymmetrische Ventilkörper (17) eine transversale Äquatorialebene aufweist, in der dessen Transversalschnitt ein Flächenmaximum ausbildet, von der aus sich der Ventilkörper (17) in Schließrichtung (C) im Wesentlichen konisch verjüngt.

50. Kupplungseinrichtung zum Verbinden von Leitungseinrichtungen nach zumindest einem der vorangegangenen Ansprüche, **dadurch gekennzeichnet, dass** der Ventilkörper (17) mindestens ein Grundelement (22) umfasst, an der die Sektoreinrichtungen (24) angelenkt sind.

51. Kupplungseinrichtung zum Verbinden von Leitungseinrichtungen nach zumindest einem der vorangegangenen Ansprüche, **dadurch gekennzeichnet, dass** die Sektoreinrichtungen (24) mittels Scharnieren, vorzugsweise Folienschamieren, oder Biegeabschnitten (23) mit dem Grundelement (22) des Ventilkörpers (17) verbunden sind und der Ventilkörper (17) vorzugsweise einstückig ausgebildet ist.

52. Kupplungseinrichtung zum Verbinden von Leitungseinrichtungen nach zumindest einem der vorangegangenen Ansprüche, **dadurch gekennzeichnet, dass** der Ventilkörper (17) abschnittsweise unterschiedliche Werkstoffe aufweist und vorzugsweise in einem Mehrkomponenten-Formverfahren herstellbar ist.

53. Kupplungseinrichtung zum Verbinden von Leitungseinrichtungen nach zumindest einem der vorangegangenen Ansprüche, **dadurch gekennzeichnet, dass** der Ventilkörper (17) im Anlenkungs- und Biegebereich der Sektoreinrichtungen (24) im Vergleich zu den daran angrenzenden Bereichen des Ventilkörpers (17) einen Werkstoff höherer Elastizität und/oder geringeren E-Moduls aufweist.

54. Kupplungseinrichtung zum Verbinden von Leitungseinrichtungen nach zumindest einem der vorangegangenen Ansprüche, **dadurch gekennzeichnet, dass** der Ventilkörper (17) im Bereich der Dichtkanten (25) der Sektoreinrichtungen (24) einen Dichtungswerkstoff aufweist.

55. Kupplungseinrichtung zum Verbinden von Leitungseinrichtungen nach zumindest einem der vorangegangenen Ansprüche, **dadurch gekennzeichnet, dass** der Ventilkörper (17) im Ventilsitzbereich der Sektoreinrichtungen (24) einen Dichtungswerkstoff aufweist.

56. Kupplungseinrichtung zum Verbinden von Leitungseinrichtungen nach zumindest einem der vorangegangenen Ansprüche, **dadurch gekennzeichnet, dass** die Sektoreinrichtungen (24) in geöffneter Stellung vorgespannt sind.

57. Kupplungseinrichtung zum Verbinden von Leitungseinrichtungen nach zumindest einem der vorangegangenen Ansprüche, **dadurch gekennzeichnet, dass** die Biegeabschnitte (23) vorzugsweise eine dreidimensionale Form aufweisen, wobei die Werkstoffelastizität zur Vorspannung der Sektoreinrichtungen (24) ausnutzbar ist.

58. Kupplungseinrichtung zum Verbinden von Leitungseinrichtungen nach zumindest einem der vorangegangenen Ansprüche, **dadurch gekennzeichnet, dass** der Ventilkörper (17) in Radialrichtung von einer Schutzhülse (19) umgeben ist, wobei diese vorzugsweise den Ventilkörper (17) zumindest in dessen geschlossenem Zustand in Radialrichtung im Wesentlichen vollständig umgibt.

59. Kupplungseinrichtung zum Verbinden von Leitungseinrichtungen nach zumindest einem der vorangegangenen Ansprüche, **dadurch gekennzeichnet, dass** die Schutzhülse (19) mit dem Kupplungsgehäuse (1) unverlierbar verbindbar und vorzugsweise mit diesem einstückig ausgebildet ist.

## Claims

1. Coupling device for connecting conduit devices, preferably quick connector, having a coupling housing comprising a connecting device that can be connected to an end section of a conduit device (2) or of a second connecting device, and a valve body (17) which can be transferred from a closed position to an open position when the end section of the conduit device (2) or of the second connecting device is brought together with the coupling housing (1), wherein the valve body (17) can be actuated by means of a force deflecting device (10) by bringing the end section of the conduit device (2) or of the second connecting device together with the coupling housing (1), **characterized in that** the coupling housing (1) of the coupling device contains a flexible section between a connecting section (4) and a valve section (18), and an axis (A1) on the side of the connecting device and an axis (A2) on the side of the valve of the coupling device can be pivoted and/or shifted with respect to each other.

2. Coupling device for connecting conduit devices according to at least one of the preceding claims, **characterized in that** the coupling housing (1) comprises a reception (5) into which the end section of the conduit device (2) can be inserted and in which this end section (2) can be fixed in the inserted position, and the valve body (17) is preferably automatically closing and can be transferred to the open position by means of the force deflecting device (10) by introducing the conduit device (2).

3. Coupling device for connecting conduit devices according to at least one of the preceding claims, **characterized in that** the coupling housing (1) comprises an angled or bent flow channel (8).

4. Coupling device for connecting conduit devices according to at least one of the preceding claims, **characterized in that** the coupling device's axis (A1) on the side of the connecting device, and the axis (A2) on the side of the valve are at an angle to each other and that the two axes preferably include an angle of 90°.

5. Coupling device for connecting conduit devices according to at least one of the preceding claims, **characterized in that** the force deflecting device comprises a pressure transmission device (10).

6. Coupling device for connecting conduit devices according to at least one of the preceding claims, **characterized in that** the pressure transmission device (10) is flexible at least in sections.

7. Coupling device for connecting conduit devices according to at least one of the preceding claims, **characterized in that** the pressure transmission device (10) is arranged in the lumen of the flow channel (8) of the coupling housing (1) and in the flow path between the connecting section (4) for the end section of the conduit device (2) or of the second connecting device and the valve body (17).

8. Coupling device for connecting conduit devices according to at least one of the preceding claims, **characterized in that** the pressure transmission device (10) is such that it is hollow inside and media can flow through it.

9. Coupling device for connecting conduit devices according to at least one of the preceding claims, **characterized in that** the pressure transmission device (10) contains a thrust vectoring device (11) which is flexible at least in sections.

10. Coupling device for connecting conduit devices (11) according to at least one of the preceding claims, **characterized in that** the thrust vectoring device comprises a metallic material.

11. Coupling device for connecting conduit devices according to at least one of the preceding claims, **characterized in that** the thrust vectoring device (11) contains a plurality of wires or filaments.

12. Coupling device for connecting conduit devices according to at least one of the preceding claims, **characterized in that** the thrust vectoring device (11) comprises a glassy or ceramic material.

13. Coupling device for connecting conduit devices according to at least one of the preceding claims, **characterized in that** the thrust vectoring device (11) comprises a sliding and/or protective coating.

14. Coupling device for connecting conduit devices according to at least one of the preceding claims, **characterized in that** the thrust vectoring device (11) comprises in the axial direction a plurality of thrust piece elements which can be moved against each other.

15. Coupling device for connecting conduit devices according to at least one of the preceding claims, **characterized in that** the thrust piece elements are essentially annular or toroidal or essentially spherical or ellipsoidal and comprise at least one flow channel and/or ribs arranged in the circumferential area around which media can flow.

16. Coupling device for connecting conduit devices according to at least one of the preceding claims, **characterized in that** the thrust vectoring device (11) comprises a polymeric material, preferably a thermoplastic, a thermoplastic elastomer, or an elastomer.

17. Coupling device for connecting conduit devices according to at least one of the preceding claims, **characterized in that** the pressure transmission device (10) is formed in one piece with the thrust vectoring device (11).

18. Coupling device for connecting conduit devices according to at least one of the preceding claims, **characterized in that** the thrust vectoring device (11) comprises stabilizing devices of a metallic or polymeric material, preferably of a metallic material, which are preferably intended for absorbing axial tensile and/or compressive forces.

19. Coupling device for connecting conduit devices according to at least one of the preceding claims, **characterized in that** the stabilizing devices (11) contain distance elements for absorbing pressure and/or limiting bending.

20. Coupling device for connecting conduit devices according to at least one of the preceding claims, **characterized in that** the thrust vectoring device (11) comprises a coil spring-like element, preferably of a metallic or polymeric material, the windings of which are intended to support each other under pressure.

21. Coupling device for connecting conduit devices according to at least one of the preceding claims, **characterized in that** the pressure transmission device (10) comprises a solid cylinder (20) flexible at least in sections and rigid with respect to thrust, the diameter of which is preferably smaller than the semidiameter of the flow channel, and which is surrounded by preferably three to eight supporting and stabilizing ribs (21) circumferentially spaced apart from each other and in radial planes at equal distances.

22. Coupling device for connecting conduit devices according to at least one of the preceding claims, **characterized in that** the pressure transmission device (10) comprises transversally guided recesses which preferably extend from a surface line or two surface lines diametrically opposed to one another to the center line and are preferably designed as V-shaped notches.

23. Coupling device for connecting conduit devices according to at least one of the preceding claims, **characterized in that** the pressure transmission device (10) comprises supporting devices (12) which can be supported against the inner wall of the flow channel (8) of the coupling housing (1).

24. Coupling device for connecting conduit devices according to at least one of the preceding claims, **characterized in that** the supporting devices (12) comprise sliding elements, preferably sliding rings, which surround the pressure transmission device.

25. Coupling device for connecting conduit devices according to at least one of the preceding claims, **characterized in that** the supporting devices (12) comprise sliding sections, sliding distance sections or sliding guide sections which are formed to the pressure transmission device (10) and can be moved against the inner wall of the flow channel (8) of the coupling housing (1) or special, in particular groove-like, sections of the same so as to slide, and which serve for friction reduction, spacing, path limitation and/or antitwist protection.

26. Coupling device for connecting conduit devices according to at least one of the preceding claims, **characterized in that** the hollow section of the flow channel (8) of the coupling housing (1) surrounding the pressure transmission device (10) comprises, at its inner wall, sliding elements, sliding distance elements or sliding guide elements, which can be moved against the pressure transmission device (10) or devices connected thereto or special, in particular groove-like, sections of the same so as to slide, and which serve for friction reduction, spacing, path limitation and/or antitwist protection.

27. Coupling device for connecting conduit devices according to at least one of the preceding claims, **characterized in that** the coupling device comprises a stop device (9) for the end section of the conduit device (2) or of the second connecting device, which can be moved against the end section of the conduit device (2) or of the second connecting device when the same is brought together with the coupling housing (1) and which is movable, and which is, when the end section of the conduit device (2) or of the second connecting device is connected to the coupling housing (1), arranged between the end section of the conduit device (2) or of the second connecting device and the pressure transmission device (10).

28. Coupling device for connecting conduit devices according to at least one of the preceding claims, **characterized in that** the stop device (9) comprises an axial central opening which is preferably arranged in alignment with the opening of a hollow pressure transmission device (10).

29. Coupling device for connecting conduit devices according to at least one of the preceding claims, **characterized in that** the stop device (9) comprises one to eight, preferably three or four, radially arranged ribs or bars which are distributed around the circumference at equal distances and can be supported at the inner wall of the coupling housing (1) and/or guided in guiding devices of the inner wall of the coupling housing (1).

30. Coupling device for connecting conduit devices according to at least one of the preceding claims, **characterized in that** the thrust vectoring device (11) comprises resilient properties and is provided for exerting a restoring force on the valve body (17) in the closing direction of the same and for transferring the valve body (17), when the end section of the conduit device (2) or of the second connecting device is removed from the connecting device (4) of the coupling housing (1), from the open position into the closed position.

31. Coupling device for connecting conduit devices according to at least one of the preceding claims, **characterized in that** the coupling device comprises a restoring device (14) which exerts a restoring force on the valve body (17) in the closing direction of the same and is provided for transferring the valve body (17), when the end section of the conduit device (2) or of the second connecting device is removed from the connecting area (4) of the coupling housing (1), from the open position into the closed position.

32. Coupling device for connecting conduit devices according to at least one of the preceding claims, **characterized in that** the restoring device comprises a coil spring (4).

33. Coupling device for connecting conduit devices according to at least one of the preceding claims, **characterized in that** the coil spring (14) is arranged within the flow channel (8) of the coupling housing (1) and at least preponderantly in a section which is arranged in the flow channel (8) between the connecting area (4) of the coupling housing (1) for the end section of the conduit device (2) or of the second connecting device and the valve body (17), preferably in the closing direction of the valve body (17), in front of the valve body (17) and adjacent to the same.

34. Coupling device for connecting conduit devices according to at least one of the preceding claims, **characterized in that** the coil spring (14) is arranged within the flow channel (8) of the coupling housing (1), enclosing at least sections of the pressure transmission device (10), between the inner wall of the coupling housing (1) and the pressure transmission device (10).

35. Coupling device for connecting conduit devices according to at least one of the preceding claims, **characterized in that** the coil spring (14) is a tension spring.

36. Coupling device for connecting conduit devices according to at least one of the preceding claims, **characterized in that** the coil spring is a pressure spring (14) and can be clamped between a stop element (13) mechanically connected to the pressure transmission device (10) and a support (16) on the side of the housing at an axial distance thereto and with respect to this stop element (13) closer to the valve body (17) in the flow direction, wherein the valve body (17) can be transferred to the closed position via the pressure transmission device (10) by pulling, and the pressure spring (14) can be loaded with pressure when the end section of the conduit device (2) or of the second connecting device is brought together with the coupling housing (1).

37. Coupling device for connecting conduit devices according to at least one of the preceding claims, **characterized in that** the support (16) of the pressure spring (14) on the side of the housing is arranged adjacent to the valve seat (15).

38. Coupling device for connecting conduit devices according to at least one of the preceding claims, **characterized in that** the valve body (17) has a one-piece and rigid design.

39. Coupling device for connecting conduit devices according to at least one of the preceding claims, **characterized in that** the valve body (17) consists of a polymeric, metallic, glassy or ceramic material.

40. Coupling device for connecting conduit devices according to at least one of the preceding claims, **characterized in that** the valve body (17) contains an essentially disk-shaped, conical, paraboloidal, pear-shaped or mushroom-shaped section which can be moved against the valve seat (15).

41. Coupling device for connecting conduit devices according to at least one of the preceding claims, **characterized in that** the valve body (17) comprises at least one ring sealing.

42. Coupling device for connecting conduit devices according to at least one of the preceding claims, **characterized in that** the valve body (17) comprises movable sector devices (24) which comprise sealing edges or sealing surfaces by which, in a closed state, a sealing contact of the sector device (24) to adjacent sealing edges or sealing surfaces (25) can be created, and these sector devices (24) can be removed from the center axis (A2) in the radial direction at least in sections when the valve body (17) is transferred to the open position and unblock a flow cross-section.

43. Coupling device for connecting conduit devices according to at least one of the preceding claims, **characterized in that**, in the closed state, a sealing contact between the sealing edges or sealing surfaces (25) of adjacent sector devices (24) can be created, and the sealing edges or sealing surfaces (25) of adjacent sector devices (24), which abut on each other in a closed state, at least in sections circumferentially move away from each other when the valve body (17) is transferred to the open position.

44. Coupling device for connecting conduit devices according to at least one of the preceding claims, **characterized in that** the valve body (17) with several sector devices (24) can be sealingly moved against an outer contour of the valve body (17) with the valve seat (15) in the closed state.

45. Coupling device for connecting conduit devices according to at least one of the preceding claims, **characterized in that** the valve body (17) is hollow, wherein the valve body (17) in the closed state forms a hollow shape closed in the direction of an opening end (O), the hollow shape comprising an opening in the direction of a non-opening end (C) of the valve body (17), and the sector devices of which form sealing edges (25) by which a sealing contact can be created between the sector devices (24) in the closed state.

46. Coupling device for connecting conduit devices according to at least one of the preceding claims, **characterized in that** the sector devices (24) can be moved relative to a valve seat (15) into the axial direction, wherein the sector devices (24) can be radially moved towards each other and closed by shifting them against the valve seat (15) and can be opened by removing them from the valve seat (15).

47. Coupling device for connecting conduit devices according to at least one of the preceding claims, **characterized in that** the sector devices (24) of the valve body (17) can be closed by pulling the valve body (17) into the valve seat (15).

48. Coupling device for connecting conduit devices according to at least one of the preceding claims, **characterized in that** the valve body (17) can be connected to the pressure transmission device by which the valve body (17) can be moved relative to the valve seat.

49. Coupling device for connecting conduit devices according to at least one of the preceding claims, **characterized in that** the rotationally symmetric or polyhedral, axially symmetric valve body (17) comprises a transversal equatorial plane in which its transversal section forms a surface maximum from which the valve body essentially conically tapers in the closing direction (C).

50. Coupling device for connecting conduit devices according to at least one of the preceding claims, **characterized in that** the valve body (17) comprises at least one basic element (22) at which the sector devices (24) are linked.

51. Coupling device for connecting conduit devices according to at least one of the preceding claims, **characterized in that** the sector devices (24) are connected to the basic element (22) of the valve body (17) by means of hinges, preferably film hinges, or bending sections (23), and the valve body (17) is preferably formed in one piece.

52. Coupling device for connecting conduit devices according to at least one of the preceding claims, **characterized in that** the valve body (17) comprises different materials by sections and can be preferably manufactured in a multi-component forming method.

53. Coupling device for connecting conduit devices according to at least one of the preceding claims, **characterized in that** the valve body (17) comprises a material of higher elasticity and/or lower modulus of elasticity in the linkage and bending area of the sector devices (24), compared to the adjacent areas of the valve body (17).

54. Coupling device for connecting conduit devices according to at least one of the preceding claims, **characterized in that** the valve body (17) comprises a sealing material in the area of the sealing edges (25) of the sector devices (24).

55. Coupling device for connecting conduit devices according to at least one of the preceding claims, **characterized in that** the valve body (17) comprises a sealing material in the area of the valve seat of the sector devices (24).

56. Coupling device for connecting conduit devices according to at least one of the preceding claims, **characterized in that** the sector devices (24) are prestressed in the open position.

57. Coupling device for connecting conduit devices according to at least one of the preceding claims, **characterized in that** the bending sections (23) preferably have a three-dimensional shape, wherein the material elasticity can be utilized for prestressing the sector devices (24).

58. Coupling device for connecting conduit devices according to at least one of the preceding claims, **characterized in that** the valve body (17) is surrounded in the radial direction by a protective sleeve (19), this sleeve preferably essentially completely surrounding the valve body (17) at least in its closed state in the radial direction.

59. Coupling device for connecting conduit devices according to at least one of the preceding claims, **characterized in that** the protective sleeve (19) can be captively connected to the coupling housing (1) and is preferably formed in one piece with the same.

## Revendications

1. Dispositif de raccordement pour relier des conduites, de préférence raccord rapide, avec une enveloppe de raccord qui est pourvue d'un dispositif de liaison apte à être relié à une partie d'extrémité d'une conduite (2) ou d'un second dispositif de liaison, et d'un corps de soupape (17) apte à passer d'une position fermée à une position ouverte quand la partie d'extrémité de la conduite (2) ou du second dispositif de liaison est assemblée avec l'enveloppe de raccord (1), le corps de soupape (17) étant apte à être actionné à l'aide d'un dispositif de déviation de force (10) par l'assemblage de la partie d'extrémité de la conduite (2) ou du second dispositif de liaison avec l'enveloppe de raccord (1),
**caractérisé en ce que** l'enveloppe de raccord (1) du dispositif de raccordement contient une partie flexible entre une partie de liaison (4) et une partie à soupape (18), et un axe situé côté dispositif de liaison (A1) et un axe situé côté soupape (A2) du dispositif de raccordement sont aptes à pivoter et/ou à coulisser l' un par rapport à l'autre.

2. Dispositif de raccordement pour relier des conduites selon l'une au moins des revendications précédentes, **caractérisé en ce que** l'enveloppe de raccord (1) présente un creux (5) dans lequel la partie d'extrémité de la conduite (2) peut être introduite et dans lequel ladite partie d'extrémité (2) est apte à être fixée en position introduite, et le corps de soupape (17) se ferme de préférence automatiquement et est apte à passer en position ouverte grâce à l'introduction de la conduite (2), à l'aide du dispositif de déviation de force (10).

3. Dispositif de raccordement pour relier des conduites selon l'une au moins des revendications précédentes, **caractérisé en ce que** l'enveloppe de raccord (1) présente un conduit de passage (8) coudé ou courbe.

4. Dispositif de raccordement pour relier des conduites selon l'une au moins des revendications précédentes, **caractérisé en ce que** l'axe situé côté dispositif de liaison (A1) et l'axe situé côté soupape (A2) du dispositif de raccordement forment un angle, et les deux axes définissent de préférence un angle de 90°.

5. Dispositif de raccordement pour relier des conduites selon l'une au moins des revendications précédentes, **caractérisé en ce que** le dispositif de déviation de force comporte un dispositif de transmission de pression (10) .

6. Dispositif de raccordement pour relier des conduites selon l'une au moins des revendications précédentes, **caractérisé en ce que** le dispositif de transmission de pression (10) est flexible au moins par endroits.

7. Dispositif de raccordement pour relier des conduites selon l'une au moins des revendications précédentes, **caractérisé en ce que** le dispositif de transmission de pression (10) est disposé dans l'orifice du conduit de passage (8) de l'enveloppe de raccord (1) et sur la trajectoire d'écoulement entre la partie de liaison (4) pour la partie d'extrémité de la conduite (2) ou pour le dispositif de liaison, et le corps de soupape (17).

8. Dispositif de raccordement pour relier des conduites selon l'une au moins des revendications précédentes, **caractérisé en ce que** l'intérieur du dispositif de transmission de pression (10) est creux et est apte à être traversé par un écoulement.

9. Dispositif de raccordement pour relier des conduites selon l'une au moins des revendications précédentes, **caractérisé en ce que** le dispositif de transmission de pression (10) contient un dispositif de déviation de poussée (11) qui est flexible au moins par endroits.

10. Dispositif de raccordement pour relier des conduites (11) selon l'une au moins des revendications précédentes, **caractérisé en ce que** le dispositif de déviation de poussée comporte une matière métallique.

11. Dispositif de raccordement pour relier des conduites selon l'une au moins des revendications précédentes, **caractérisé en ce que** le dispositif de déviation de poussée (11) contient plusieurs fils ou filaments.

12. Dispositif de raccordement pour relier des conduites selon l'une au moins des revendications précédentes, **caractérisé en ce que** le dispositif de déviation de poussée (11) comporte une matière vitreuse ou céramique.

13. Dispositif de raccordement pour relier des conduites selon l'une au moins des revendications précédentes, **caractérisé en ce que** le dispositif de déviation de poussée (11) présente un revêtement de glissement et/ou de protection.

14. Dispositif de raccordement pour relier des conduites selon l'une au moins des revendications précédentes, **caractérisé en ce que** le dispositif de déviation de poussée (11) comprend dans le sens axial plusieurs éléments partiels de poussée aptes à être appliqués les uns contre les autres.

15. Dispositif de raccordement pour relier des conduites selon l'une au moins des revendications précédentes, **caractérisé en ce que** les éléments partiels de poussée ont une forme globalement annulaire ou toroïdale, ou ont une forme globalement sphérique ou ellipsoïdale et présentent au moins un conduit de passage et/ou des nervures disposées dans la zone périphérique et autour desquelles peut passer un écoulement.

16. Dispositif de raccordement pour relier des conduites selon l'une au moins des revendications précédentes, **caractérisé en ce que** le dispositif de déviation de poussée (11) comporte une matière polymère, de préférence un thermoplastique, un élastomère thermoplastique ou un élastomère.

17. Dispositif de raccordement pour relier des conduites selon l'une au moins des revendications précédentes, **caractérisé en ce que** le dispositif de transmission de pression (10) est réalisé d'une seule pièce avec le dispositif de déviation de poussée (11).

18. Dispositif de raccordement pour relier des conduites selon l'une au moins des revendications précédentes, **caractérisé en ce que** le dispositif de déviation de poussée (11) présente des dispositifs de stabilisation en matière métallique ou polymère, de préférence en matière métallique, qui sont destinés de préférence à recevoir des forces axiales de traction et/ou de pression.

19. Dispositif de raccordement pour relier des conduites selon l'une au moins des revendications précédentes, **caractérisé en ce que** les dispositifs de stabilisation (11) contiennent des éléments d'écartement pour recevoir la pression et/ou limiter la flexion.

20. Dispositif de raccordement pour relier des conduites selon l'une au moins des revendications précédentes, **caractérisé en ce que** le dispositif de déviation de poussée (11) comporte un élément du type ressort hélicoïdal, de préférence en matière métallique ou polymère, dont les spires sont destinées à s'appuyer les unes contre les autres, en présence d'une pression.

21. Dispositif de raccordement pour relier des conduites selon l'une au moins des revendications précédentes, **caractérisé en ce que** le dispositif de transmission de pression (10) comporte au moins par endroits un cylindre (20) flexible et rigide en poussée, dont le diamètre est de préférence inférieur ou rayon du conduit de passage, et est entouré de préférence par trois à huit nervures d'appui et de stabilisation (21) qui sont disposées à intervalle régulier dans des plans radiaux et les unes par rapport aux autres dans le sens circonférentiel.

22. Dispositif de raccordement pour relier des conduites selon l'une au moins des revendications précédentes, **caractérisé en ce que** le dispositif de transmission de pression (10) présente des entailles réalisées transversalement qui sont de préférence dirigées, à partir d'une génératrice ou de deux génératrices diamétralement opposées, vers l'axe médian et qui sont réalisées de préférence sous la forme d'encoches en V.

23. Dispositif de raccordement pour relier des conduites selon l'une au moins des revendications précédentes, **caractérisé en ce que** le dispositif de transmission de pression (10) comporte des dispositifs d'appui (12) qui sont aptes à s'appuyer contre la paroi intérieure du conduit de passage (8) de l'enveloppe de raccord (1).

24. Dispositif de raccordement pour relier des conduites selon l'une au moins des revendications précédentes, **caractérisé en ce que** les dispositifs d'appui (12) comprennent des éléments de glissement, de préférence des bagues de glissement, qui entourent le dispositif de transmission de pression.

25. Dispositif de raccordement pour relier des conduites selon l'une au moins des revendications précédentes, **caractérisé en ce que** les dispositifs d'appui (12) comprennent des parties de glissement, des parties d'écartement et de glissement ou des parties de guidage et de glissement qui sont rapportées sur le dispositif de transmission de pression (10) et qui sont aptes à être appliquées avec un glissement contre la paroi intérieure du conduit de passage (8) de l'enveloppe de raccord (1) ou de parties particulières, notamment en forme de rainures, de celle-ci, et qui servent à réduire le frottement, à réaliser un écartement, à limiter la course et/ou à empêcher une rotation.

26. Dispositif de raccordement pour relier des conduites selon l'une au moins des revendications précédentes, **caractérisé en ce que** la partie creuse du conduit de passage (8) de l'enveloppe de raccord (1) qui entoure le dispositif de transmission de pression (10) présente sur sa paroi intérieure des éléments de glissement, des éléments d'écartement et de glissement ou des éléments de guidage et de glissement qui sont aptes à être appliqués avec un glissement contre le dispositif de transmission de pression (10) ou contre des dispositifs reliés à celui-ci ou contre des parties particulières, notamment en forme de rainures, de ces dispositifs, et qui servent à réduire le frottement, à réaliser un écartement, à limiter la course et/ou à empêcher une rotation.

27. Dispositif de raccordement pour relier des conduites selon l'une au moins des revendications précédentes, **caractérisé en ce que** le dispositif de raccordement comporte un dispositif de butée (9) pour la partie d'extrémité de la conduite (2) ou pour le second dispositif de liaison, qui est apte à être appliqué contre la partie d'extrémité de la conduite (2) ou contre ledit second dispositif de liaison lors de l'assemblage de celle-ci ou de celui-ci avec l'enveloppe de raccord (1) et qui est mobile, et qui est disposé, lors de la liaison de la partie d'extrémité de la conduite (2) ou du second dispositif de liaison avec l'enveloppe de raccord (1), entre ladite partie d'extrémité de la conduite (2) ou ledit second dispositif de liaison et le dispositif de transmission de pression (10).

28. Dispositif de raccordement pour relier des conduites selon l'une au moins des revendications précédentes, **caractérisé en ce que** le dispositif de butée (9) présente une ouverture centrale axiale qui est disposée de préférence dans l'alignement de l'ouverture d'un dispositif de transmission de pression creux (10).

29. Dispositif de raccordement pour relier des conduites selon l'une au moins des revendications précédentes, **caractérisé en ce que** le dispositif de butée (9) présente une à huit, de préférence trois ou quatre nervures ou pattes disposées radialement, qui sont réparties à intervalle régulier sur la circonférence et qui sont aptes à s'appuyer contre la paroi intérieure de l'enveloppe de raccord (1) et/ou aptes à être guidées dans des dispositifs de guidage de la paroi intérieure de l'enveloppe de raccord (1).

30. Dispositif de raccordement pour relier des conduites selon l'une au moins des revendications précédentes, **caractérisé en ce que** le dispositif de déviation de poussée (11) présente des caractéristiques élastiques et est destiné à contraindre le corps de soupape (17) dans le sens de fermeture de celui-ci avec une force de rappel et à faire passer le corps de soupape (17) de la position ouverte à la position fermée quand on enlève de la zone de liaison (4) de l'enveloppe de raccord (1) la partie d'extrémité de la conduite (2) ou du second dispositif de liaison.

31. Dispositif de raccordement pour relier des conduites selon l'une au moins des revendications précédentes, **caractérisé en ce que** le dispositif de raccordement comprend un dispositif de rappel (14) qui contraint le corps de soupape (17) dans le sens de fermeture de celui-ci avec une force de rappel et qui est destiné à faire passer le corps de soupape (17) de la position ouverte à la position fermée quand on enlève de la zone de liaison (4) de l'enveloppe de raccord (1) la partie d'extrémité de la conduite (2) ou du second dispositif de liaison.

32. Dispositif de raccordement pour relier des conduites selon l'une au moins des revendications précédentes, **caractérisé en ce que** le dispositif de rappel comporte un ressort hélicoïdal (14).

33. Dispositif de raccordement pour relier des conduites selon l'une au moins des revendications précédentes, **caractérisé en ce que** le ressort hélicoïdal (14) est disposé à l'intérieur du conduit de passage (8) de l'enveloppe de raccord (1) et au moins en grande partie dans une partie qui est disposée dans le conduit de passage (8) entre la zone de liaison (4) de l'enveloppe de raccord (1) prévue pour la partie d'extrémité de la conduite (2) ou pour le second dispositif de liaison, et le corps de soupape (17), de préférence avant le corps de soupape (17), dans le sens de fermeture de celui-ci, et près de lui.

34. Dispositif de raccordement pour relier des conduites selon l'une au moins des revendications précédentes, **caractérisé en ce que** le ressort hélicoïdal (14) est disposé à l'intérieur du conduit de passage (8) de l'enveloppe de raccord (1), en entourant des parties au moins du dispositif de transmission de pression, entre la paroi intérieure de l'enveloppe de raccord (1) et le dispositif de transmission de pression (10).

35. Dispositif de raccordement pour relier des conduites selon l'une au moins des revendications précédentes, **caractérisé en ce que** le ressort hélicoïdal (14) est constitué par un ressort de traction.

36. Dispositif de raccordement pour relier des conduites selon l'une au moins des revendications précédentes, **caractérisé en ce que** le ressort hélicoïdal est constitué par un ressort de traction (14) et est apte à être accroché entre un élément de butée (13) qui est relié mécaniquement au dispositif de transmission de pression (10), et un support (16) qui est situé côté enveloppe, qui est espacé axialement de l'élément de butée (13) et qui est plus proche du corps de soupape (17) que celui-ci, dans le sens d'écoulement, le corps de soupape (17) étant apte à être amené en position de fermeture grâce à une traction, par l'intermédiaire du dispositif de transmission de pression (10), et le ressort de compression (14) étant apte à être contraint en pression lors de l'assemblage de la partie d'extrémité de la conduite (2) ou du second dispositif de liaison avec l'enveloppe de raccord (1).

37. Dispositif de raccordement pour relier des conduites selon l'une au moins des revendications précédentes, **caractérisé en ce que** le support (16), prévu côté enveloppe, du ressort de compression (14) est disposé près du siège de soupape (15).

38. Dispositif de raccordement pour relier des conduites selon l'une au moins des revendications précédentes, **caractérisé en ce que** le corps de soupape (17) est construit d'une seule pièce et est rigide.

39. Dispositif de raccordement pour relier des conduites selon l'une au moins des revendications précédentes, **caractérisé en ce que** le corps de soupape (17) se compose d'une manière polymère, métallique, vitreuse ou céramique.

40. Dispositif de raccordement pour relier des conduites selon l'une au moins des revendications précédentes, **caractérisé en ce que** le corps de soupape (17) contient une partie globalement en forme de disque, de cône, de parabole, de poire ou de champignon qui est apte à être appliquée contre le siège de soupape (15).

41. Dispositif de raccordement pour relier des conduites selon l'une au moins des revendications précédentes, **caractérisé en ce que** le corps de soupape (17) présente au moins un joint annulaire.

42. Dispositif de raccordement pour relier des conduites selon l'une au moins des revendications précédentes, **caractérisé en ce que** le corps de soupape (17) comprend des dispositifs mobiles en forme de secteurs (24) présentant des bords d'étanchéité ou des surfaces d'étanchéité grâce auxquels, en position fermée, un contact d'étanchéité du dispositif en forme de secteur (24) avec les bords ou surfaces d'étanchéité (25) voisins peut être réalisé, et ces dispositifs en forme de secteurs (24), quand le corps de soupape (17) passe en position ouverte, sont aptes à être éloignés au moins par endroits de l'axe médian (A2), dans le sens radial, et dégagent une section transversale de passage.

43. Dispositif de raccordement pour relier des conduites selon l'une au moins des revendications précédentes, **caractérisé en ce qu'**en position fermée, un contact d'étanchéité peut être réalisé entre les bords ou surfaces d'étanchéité (25) de dispositifs en forme de secteurs (24) voisins, et quand le corps de soupape (17) passe en position ouverte, les bords ou surfaces d'étanchéité (25), appliqués les uns contre les autres en position fermée, de dispositifs en forme de secteurs (24) voisins s'éloignent au moins par endroits les uns des autres, dans le sens circonférentiel.

44. Dispositif de raccordement pour relier des conduites selon l'une au moins des revendications précédentes, **caractérisé en ce que** le corps de soupape (17) avec plusieurs dispositifs en forme de secteurs (24), en position fermée, est apte à être appliqué de manière étanche, avec son contour extérieur, contre le siège de soupape (15).

45. Dispositif de raccordement pour relier des conduites selon l'une au moins des revendications précédentes, **caractérisé en ce que** le corps de soupape (17) est creux, étant précisé qu'il définit en position fermée une forme creuse qui est fermée dans le sens d'une extrémité d'ouverture (O) et qui présente une ouverture dans le sens d'une extrémité de non ouverture (C) du corps de soupape (17), et étant précisé que les dispositifs en forme de secteurs de ce dernier forment des bords d'étanchéité (25) grâce auxquels un contact d'étanchéité entre les dispositifs en forme de secteurs (24) peut être réalisé, en position fermée.

46. Dispositif de raccordement pour relier des conduites selon l'une au moins des revendications précédentes, **caractérisé en ce que** les dispositifs en forme de secteurs (24) sont mobiles dans le sens axial par rapport à un siège de soupape (15), étant précisé qu'ils sont aptes à se rapprocher et à se fermer radialement en étant poussés contre le siège de soupape (15), et qu'ils sont aptes à s'ouvrir en étant éloignés du siège de soupape (15).

47. Dispositif de raccordement pour relier des conduites selon l'une au moins des revendications précédentes, **caractérisé en ce que** les dispositifs en forme de secteurs (24) du corps de soupape (17) sont aptes à se fermer grâce à une rétraction de celui-ci dans le siège de soupape (15).

48. Dispositif de raccordement pour relier des conduites selon l'une au moins des revendications précédentes, **caractérisé en ce que** le corps de soupape (17) est apte à être relié au dispositif de transmission de pression à l'aide duquel il est mobile par rapport au siège de soupape.

49. Dispositif de raccordement pour relier des conduites selon l'une au moins des revendications précédentes, **caractérisé en ce que** le corps de soupape (17) à symétrie axiale et à symétrie de révolution ou polyèdre présente un plan équatorial transversal dans lequel sa coupe transversale forme une surface maximale à partir de laquelle il a une forme globalement effilée en cône dans le sens de fermeture (C).

50. Dispositif de raccordement pour relier des conduites selon l'une au moins des revendications précédentes, **caractérisé en ce que** le corps de soupape (17) comprend au moins un élément de base (22) auquel sont articulés les dispositifs en forme de secteurs (24).

51. Dispositif de raccordement pour relier des conduites selon l'une au moins des revendications précédentes, **caractérisé en ce que** les dispositifs en forme de secteurs (24) sont reliés à l'élément de base (22) du corps de soupape (17) à l'aide de charnières, de préférence des charnières en forme de films, ou à l'aide de parties de flexion (23), et le corps de soupape (17) est formé de préférence d'une seule pièce.

52. Dispositif de raccordement pour relier des conduites selon l'une au moins des revendications précédentes, **caractérisé en ce que** le corps de soupape (17) comporte des matières différentes, par endroits, et est de préférence apte à être fabriqué selon un procédé de moulage à plusieurs composants.

53. Dispositif de raccordement pour relier des conduites selon l'une au moins des revendications précédentes, **caractérisé en ce que** le corps de soupape (17), dans la zone d'articulation et de flexion des dispositifs en forme de secteurs (24), comporte une matière à élasticité plus grande et/ou à module d'élasticité plus faible par rapport aux zones du corps de soupape (17) voisines.

54. Dispositif de raccordement pour relier des conduites selon l'une au moins des revendications précédentes, **caractérisé en ce que** le corps de soupape (17) comporte une matière d'étanchéité dans la zone des bords d'étanchéité (25) des dispositifs en forme de secteurs (24) .

55. Dispositif de raccordement pour relier des conduites selon l'une au moins des revendications précédentes, **caractérisé en ce que** le corps de soupape (17) comporte une matière d'étanchéité dans la zone de siège de soupape des dispositifs en forme de secteurs (24).

56. Dispositif de raccordement pour relier des conduites selon l'une au moins des revendications précédentes, **caractérisé en ce que** les dispositifs en forme de secteurs (24) sont contraints en position ouverte.

57. Dispositif de raccordement pour relier des conduites selon l'une au moins des revendications précédentes, **caractérisé en ce que** les parties de flexion (23) présentent de préférence une forme en trois dimensions, l'élasticité de la matière pouvant être utilisée pour contraindre les dispositifs en forme de secteurs (24).

58. Dispositif de raccordement pour relier des conduites selon l'une au moins des revendications précédentes, **caractérisé en ce que** le corps de soupape (17) est entouré dans le sens radial par un manchon de protection (19), ce manchon entourant de préférence quasiment entièrement le corps de soupape (17), au moins dans la position fermée de celui-ci, dans le sens radial.

59. Dispositif de raccordement pour relier des conduites selon l'une au moins des revendications précédentes, **caractérisé en ce que** le manchon de protection (19) est relié à l'enveloppe de raccord (1) de manière imperdable et est de préférence réalisé d'une seule pièce avec ladite enveloppe (1).
